(19) Europäisches Patentamt
European Patent Office
Office européen des brevets

(11) Veröffentlichungsnummer: **0 036 994**
**B1**

(12) # EUROPÄISCHE PATENTSCHRIFT

(45) Veröffentlichungstag der Patentschrift: **13.11.85**

(51) Int. Cl.[4]: **C 08 J 9/00**, C 08 G 18/61, F 16 F 1/37

(21) Anmeldenummer: **81101919.9**

(22) Anmeldetag: **16.03.81**

(54) **Verfahren zur Herstellung wasserdichter Formkörper aus zelligen Polyurethan-Elastomeren und ihre Verwendung als Federungselemente.**

(30) Priorität: **28.03.80 DE 3012125**
**01.08.80 DE 3029272**

(43) Veröffentlichungstag der Anmeldung:
**07.10.81 Patentblatt 81/40**

(45) Bekanntmachung des Hinweises auf die Patenterteilung:
**13.11.85 Patentblatt 85/46**

(84) Benannte Vertragsstaaten:
**BE CH DE FR GB IT LI NL SE**

(56) Entgegenhaltungen:
**EP - A - 0 023 646**
**DE - A - 2 232 525**
**DE - A - 2 444 405**
**FR - A - 1 158 057**
**FR - A - 1 224 849**
**FR - A - 1 270 169**
**FR - A - 1 402 389**
**US - A - 3 420 782**
**US - A - 4 163 830**

**PLASTIQUES MODERNES ET ELASTOMERES, Band 29, Heft 4, Mai 1977, PARIS (FR) G. ALICKE et al.: "Elastomère cellulaire de polyuréthane pour amortisseurs de véhicules", Seiten 64-66 und 69, erster Teil**

(73) Patentinhaber: **BAYER AG, Konzernverwaltung RP Patentabteilung, D-5090 Leverkusen 1 Bayerwerk (DE)**

(72) Erfinder: **Henrichs, Paul, Ing. grad., Gierather Wald 43, D-5060 Bergisch-Gladbach 2 (DE)**
Erfinder: **Haas, Peter, Dr., Zwengenberger Strasse 43, D-5657 Haan 1 (DE)**
Erfinder: **Hoppe, Hans-Georg, Ing. grad., Kurlandweg 31, D-5653 Leichlingen (DE)**
Erfinder: **Grimm, Wolfgang, Ing. grad., In Holzhausen 81, D-5090 Leverkusen 3 (DE)**

(56) Entgegenhaltungen: (Fortsetzung)
**PLASTIQUES MODERNES ET ELASTOMERES, Band 20, Heft 5, Juni 1977, PARIS (FR) G. ALICKE et al.: "Elastomère cellulaire de polyuréthane pour amortisseurs de véchicules", Seiten 58-60, zweiter Teil**

**Die Akte enthält technische Angaben, die nach dem Eingang der Anmeldung eingereicht wurden und die nicht in dieser Patentschrift enthalten sind.**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die Erfindung betrifft ein verbessertes Verfahren zur Herstellung von wasserdichten zelligen Polyurethan-Elastomeren aus Polyisocyanaten, höhermolekularen Polyhydroxylverbindungen, Wasser als Kettenverlängerungs- und Treibmittel, sowie gegebenenfalls zusätzlichen Kettenverlängerungsmitteln und ist durch Verwendung bestimmter Silikonderivate gekennzeichnet. Das neue Verfahren erlaubt die Herstellung von wasserdichten, zelligen Formkörpern, ohne daß an der Oberfläche eine Haut ausgebildet werden muß, wie sie beispielsweise von den Integralschaumstoffen bekannt ist.

Formkörper aus zelligen Polyurethan-Elastomeren werden technisch in an sich bekannter Weise aus Polyisocyanaten, höhermolekularen Polyhydroxylverbindungen, Wasser als Kettenverlängerungs- und Treibmittel und gegebenenfalls zusätzlichen Kettenverlängerungsmitteln aufgebaut. Von den Polyurethan-Schaumstoffen unterscheiden sich zellige Polyurethan-Elastomere durch wesentlich höhere Raumgewichte (ca. 0,3 bis 0,8 g/cm$^3$), bessere physikalische Eigenschaften und die dadurch bedingten technischen Anwendungsmöglichkeiten. Besonders hochwertige zellige Polyurethan-Elastomere, wie beispielsweise ein aus 1,5-Naphthylendiisocyanat, einem linearen Ethandiol-Polyadipat (Molekulargewicht ca. 2000) und Wasser hergestelltes Produkt, werden großtechnisch u. a. als Puffer und Dämpfungsmaterial eingesetzt.

Ein großes Anwendungsgebiet besteht in der Kraftfahrzeugindustrie, wo derartige Werkstoffe in erster Linie als Dämpfungs- und Anschlagpuffer eingesetzt werden. Insbesondere bei Federbeinkonstruktionen ist es vorteilhaft, die aus Gummi hergestellten Zusatzfedern durch solche aus zelligen Polyurethan-Elastomeren zu ersetzen, da sich diese von elastischen Kompaktmaterialien durch eine wesentlich höhere Verformbarkeit unterscheiden. Verformungen bis zu 80% sind in der Praxis (z. B. Zusatzfedern bei Automobilen) durchaus möglich.

Die aus zelligen Polyurethan-Elastomeren hergestellten Federungselemente werden bei Automobilen innerhalb der Gesamtfederbeinkonstruktion, bestehend aus Stoßdämpfer, Spiralfeder und dem Puffer aus zelligem Elastomer, auf die Kolbenstange des Stoßdämpfers geschoben. Bei dieser Art der Anordnung besteht nun häufig die Gefahr der Verschmutzung der Puffer, da in die Dämpfungspuffer aufgrund ihrer überwiegend offenzelligen Porenstruktur Spritzwasser und Staub eindringen können. Vor allem bei tiefen Temperaturen kann dadurch das Federungsverhalten verändert werden; abgesehen davon werden infolge des Einflusses von Wasser und Schmutz auch vorzeitige Korrosions- und Abrieberscheinungen auf der Kolbenstange des Stoßdämpfers beobachtet.

In der deutschen Patentanmeldung P 29 20 502.5 wird bereits vorgeschlagen, verbesserte zellige Polyurethane mit einer Dichte von 0,45 bis 0,8 aus aromatischen Polyisocyanaten, Polyhydroxylverbindungen mit einem Molekulargewicht von 400 bis 6000, Wasser, gegebenenfalls Glykolen mit einem Molgewicht von 62 bis 250, sowie unter Zusatz von 0,1 bis 0,8 Gew.-% an aromatischen, diprimären Diaminen, herzustellen. Der Zusatz an aromatischen Diaminen läßt dabei die Gewinnung von Formteilen mit erheblich verbesserter Wärmebeständigkeit und unter geringerem Forminnendruck bei der Herstellung zu. Derartigen zelligen Polyurethanen mangelt jedoch die Wasserdichtigkeit bei Flex-Belastungen. Außerdem hat sich gezeigt, daß auch die Sicherheit der Erzielung sehr gleichmäßiger und dabei gleichzeitig sehr feinzelliger Strukturen durch das erfindungsgemäße Verfahren erreicht wird, ebenso eine leichte Entformbarkeit ohne Gefahr von Rißbildung durch Aufplatzen, sowie eine gleichmäßige Oberflächenhaut.

In der DE-OS 2 232 525 werden selbstverlöschende Schaumstoffe mit Dichten zwischen 35 und 50 kg/m$^3$ unter Mitverwendung von Phenyl-trimethylsiloxylsiloxanen der Formel

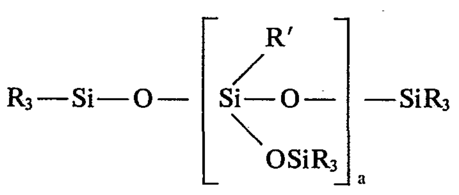

($R_3$ = $C_1$–$C_3$-Alkyl; R' = arom. Rest.)

auf der Basis entweder verzweigter (mehr als bifunktioneller) Polyether und/oder höherfunktioneller Polyisocyanate nach üblichen Schaumstoffrezepturen herstellt. In unserem erfindungsgemäßen Verfahren werden weder diese speziellen Silikone noch Schaumstoffe mit sehr geringem Raumgewicht, die sich aus verzweigten Reaktionskomponenten bilden, eingesetzt.

In der FR-PS 1 158 057 (DE-AS 1 059 656) wird ebenfalls die Herstellung von Schaumstoffen auf der Basis eines NCO-Prepolymers aus Polyalkylenetherglykolen mit sekundären OH-Gruppen, Polyisocyanaten, katalysiert mit tertiären Aminen, unter Zumischung von Di- oder Trialkanolaminen oder einer Polyhydroxylverbindung mit 3, aber nicht mehr als 6 OH-Gruppen, unter Zusatz von 0,1—3,0 Gew.-Teilen eines Silikonöls (Polydimethylsiloxans), 0—0,5 Teilen eines Alkalicarbonats und 1—5 Gew.-Teilen Wassers, beschrieben. Auch hier handelt es sich um typische Leichtschaumstoffe unter Verwendung von Polyethern mit sekundären OH-Gruppen unter Mitverwendung mehrfunktioneller Komponenten

und eines (nichteinbaufähigen) Polydimethylsiloxans. Die Notwendigkeit einer Verzweigung zum Aufbau solcher Schaumstoffe wird in der FR-PS 1 224 849/1. Absatz, als Stand der Technik angeführt.

In der FR-PS 1 402 389 (DE-AS 1 197 616) wird die Herstellung von PU-Schaumstoffen (Dichten lt. Beispielen zwischen 25 und 46 kg/m$^3$) auf der Basis von lt. Beispielen verzweigten Polyalkylenetherpolyolen, Diisocyanaten, Wasser- und/oder anderen Treibmitteln, in Gegenwart von gegenüber NCO-Gruppen inerten Silikonderivaten als Stabilisatoren beschrieben, wobei man solche Silikonderivate einsetzt, welche separat hergestellte Umsetzungsprodukte aus Polyalkylenglykol-ethern, Polyisocyanaten und über organische Reste an Siliciumatome gebundene OH- oder SH-Gruppen aufweisenden Polysiloxane sind.

In der US 3 420 782 (DE-AS 1 122 698) wird ebenfalls die Herstellung von Pu-Schaumstoffen nach dem one-shot-Verfahren aus Polyethern, Polyisocyanaten, Wasser und Zusatzstoffen beschrieben, wobei lt. Beispielen Schaumstoffe niedriger Dichte (z. B. 44 kg/m$^3$) auf der Basis eines verzweigten Polypropylenglykolethers hergestellt werden. Es werden hierbei lagerstabile Organo-silicium-Verbindungen, welche sich von Methylethyl-aminen oder Methylethylethern ableiten, deren Methylgruppen je einen Siloxanylrest tragen und deren Ethylgruppen als gegebenenfalls substituierte $\beta$-Aminoethyl- oder gegebenenfalls veretherte $\beta$-Hydroxyethylreste vorliegen. Aus der Vielzahl der angeführten Organosilicium-Verbindungen sind auch einige, welche den in der vorliegenden Anmeldung beanspruchten Organopolysiloxanen entsprechen, doch handelt es sich auch hier um sowohl verschiedene Verfahren zur Herstellung der Polyurethane als auch um verschiedene Endprodukte (Schaumstoffe).

Die Literaturstellen »Plastiques modernes et élastoméres«, Mai 1955, Seite 64—69 und Juni 1977, Seite 58—60 beschreiben die Eigenschaften von zellulären PU-Elastomeren und ihre Unterschiede zu PU-Schaumstoffen.

Aufgabe der vorliegenden Erfindung war es somit, Federungselemente zur Verfügung zu stellen, die unter Beibehaltung der bisher üblichen Rezepturen und mittels der in der Praxis üblichen Verarbeitungseinrichtungen hergestellt werden können und bei gleichen oder sogar verbesserten mechanischen Eigenschaften (z. B. Federungseigenschaften) auch noch wasserdicht sind. Eine möglichst geringe Wasseraufnahme auch bei mehrfacher Wechselbelastung ist eine wesentliche Eigenschaft für die Anwendung als Puffer- und Federungselemente im Automobilsektor. Gleichzeitig soll ein möglichst gleichmäßiges, hydrophobes, zelliges Polyurethanelastomeres (vorzugsweise auf Polyesterurethanbasis) in sicherer und einfacher Verfahrenstechnik erhalten werden. Die Wärmestandfestigkeit und die dynamischen Eigenschaftswerte sollen gleichfalls erhöht sein. Außerdem war ein Verfahren aufzufinden, mit dem wasserdichte, sehr gleichmäßig feinzellige Polyurethanelastomere der Dichte 0,3 bis 0,8 g/cm$^3$ auch auf einfacheren Maschinen vom Rührwerkstyp sicher, reproduzierbar und in guter Handhabbarkeit in Formen hergestellt werden können.

Überraschenderweise wurde gefunden, daß man die genannten Ziele erreichen kann, wenn man bei der Herstellung der zelligen Elastomere, vorzugsweise in der Präpolymerstufe, kleine Menge an im wesentlichen linearen organofunktionellen Polysiloxanen, gegebenenfalls als NCO- oder OH-Silikonpräpolymere, mitverwendet. Außerdem wird durch derartige Zusätze der Gleitreibungskoeffizient der zelligen Elastomere herabgesetzt, so daß bei dynamischer Beanspruchung des Federelementes der Materialabrieb auf der Kolbenstange wesentlich vermindert wird. Als besonders günstig hat sich dabei ein solches wasserdichtes, sehr feinzellig anfallendes Polyurethanelastomer erwiesen, bei dem während der Polyurethansynthese gleichzeitig eine geringe Menge an aromatischen Diaminen mitverwendet wird, da hierdurch die Gleichmäßigkeit, Wärmestandfestigkeit, dynamischen Eigenschaften und die Reproduzierbarkeit der Herstellung wesentlich verbessert und die Handhabung des Polyurethanreaktionsgemisches wegen des geringeren Formdruckes, der leichteren Entformbarkeit und des glatteren Oberfläche wesentlich erleichtert wird.

Gegenstand der Erfindung ist somit ein Verfahren zur Herstellung eines wasserdichten, feinzelligen Polyurethanelastomeren mit einer Dichte von 0,3 bis 0,8 g/cm$^3$ durch Umsetzung von NCO-Präpolymeren aus aromatischen Polyisocyanaten und Polyhydroxylverbindungen des Molekulargewichts 400 bis 6000 mit Wasser, gegebenenfalls unter Mitverwendung von kleinen Anteilen an aromatischen Diaminen in einer beliebigen Verfahrensstufe, in einem Äquivalentverhältnis zwischen NCO-Gruppen und gegenüber Isocyanaten reaktiven Gruppen zwischen 0,95 : 1 bis 1,1 : 1, gegebenenfalls in Gegenwart von Katalysatoren und/oder anderen, an sich bekannten Hilfs- und Zusatzmitteln, Einfüllen der Reaktionsmischung in Formen zur Bildung des Elastomeren der gewünschten Dichte, Ausheizen bei erhöhten Temperaturen und gegebenenfalls Versehen der Elastomeren mit einer durchgehenden, dichten, nichtporösen Haut aus Polyurethan oder Polyurethanharnstoff, mit einer Dicke von 0,05 bis 1 mm,

dadurch gekennzeichnet, daß man

A) 4,4'-Diisocyanatodiphenylmethan oder 1,5-Naphthylendiisocyanat in NCO/OH-Äquivalentverhältnissen von 1,5 : 1 bis 3 : 1 mit

B) Polyestern auf Basis von Adipinsäure und aliphatischen Diolen oder Polyethern auf Basis von Tetramethylenoxiddiolen
zu einem NCO-Präpolymeren umsetzt und dieses mit

C) 0,5 bis 2,0 Gew.-% Wasser, bezogen auf das Gesamtgemisch aller anderen Reaktionspartner, zum Elastomeren umsetzt, wobei
D) gegebenenfalls in einer beliebigen Verfahrensstufe, ein Zusatz von 0,1 bis 0,8 Gew.-% an 4,4'-Diaminodiphenylmethan, 1,5-Diaminonaphthalin oder 2,4- und/oder 2,6-Toluylendiamin,
E) gegebenenfalls Katalysatoren und/oder anderen, an sich bekannten Hilfs- und Zusatzmitteln und
F) in einer der Verfahrensstufen ein Zusatz zum Reaktionsgemisch von 0,1 bis 3 Gew.-%, bezogen auf den gesamten Reaktionsansatz, eines oder mehrerer Polysiloxane der allgemeinen Formel

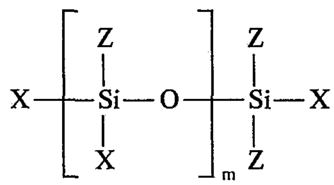

in welcher

m eine ganze Zahl zwischen 5 und 250 bedeutet, die Reste
Z gleich oder verschieden sein können und für $C_1$- bis $C_5$-Alkyl, $C_6$- bis $C_{15}$-Aryl oder Siloxylreste, vorzugsweise jedoch für Methyl- und/oder Phenylreste stehen und die Reste
X die gleiche Bedeutung wie Z haben oder H—Y—R-Gruppen darstellen, wobei jedoch das Polysiloxan insgesamt höchstens 5, bevorzugt höchstens 2, mindestens jedoch 1 Gruppe H—Y—R— enthält, wobei
Y für

—NR'—, —O—, 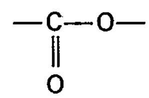 oder —S—,

vorzugsweise für —O— steht,
R einen gegebenenfalls Heteroatome enthaltenden $C_1$- bis $C_6$-Alkylenrest, vorzugsweise einen Methylenrest darstellt und
R' Wasserstoff, einen $C_1$- bis $C_6$-Alkylrest oder einen $C_5$- bis $C_9$-Cycloalkylrest bedeutet,

wobei im Falle von X gleich H—Y—R diese organofunktionellen Polysiloxane mit Polyisocyanaten in einem Äquivalentverhältnis NCO-Gruppen/aktiven Harnstoffatomen von ca. 1,5 : 1 bis 3 : 1 und gegebenenfalls überschüssigen Kettenverlängerungsmitteln aus der Reihe von mindestens difunktionellen Alkoholen bzw. Aminoalkoholen in einem Äquivalentverhältnis zwischen Isocyanatgruppen und aktiven Wasserstoffatomen von 1 : 1,5 bis 1 : 6 in NCO- oder OH-funktionelle Silikon-Präpolymere überführt sein können, erfolgt.

Gegenstand der Erfindung ist ferner die Verwendung der wasserdichten, feinzelligen Polyurethanelastomere, welche nach diesem Verfahren hergestellt wurden, in Federungs- und Dämpfungselementen.

Die Herstellung der zelligen Polyurethane kann nach an sich üblichen Verfahrensweisen und aus an sich bekannten Ausgangsstoffen A–E erfolgen.

Als Polyisocyanate A) kommen für das Verfahren 4,4'-Diisocyanatodiphenylmethan oder 1,5-Naphthylendiisocyanat in Betracht.

Als höhermolekulare Polyhydroxylverbindungen B) werden vorzugsweise durchschnittlich 2 bis 3 Hydroxylgruppen aufweisende Verbindungen vom Molekulargewicht 400 bis 6000, insbesondere 800 bis 4000, eingesetzt, z. B. Polyester, Polyether, Polythioether, Polyacetale, Polycarbonate und Polyesteramide, wie sie für die Herstellung von homogenen und von zellförmigen Polyurethanen an sich bekannt sind.

Derartige Verbindungen werden z. B. in den Deutschen Offenlegungsschriften 2 550 796, 2 550 797, 2 624 527, 2 638 759, 2 302 564 (US-PS 3 963 679), 2 402 840 (US-PS 3 984 607), 2 457 387 (US-PS 4 035 213), 2 829 670, 2 830 949 und 2 830 953 ausführlich beschrieben.

Erfindungsgemäß bevorzugt sind Polyester auf Basis von Adipinsäure und aliphatischen Diolen oder Diolmischungen, z. B. Ethylenglykol, Propylenglykol, Butandiol-1,4, Hexandiol-1,6 oder Neopentylglykol, doch sich auch Polyether auf Basis von Tetramethylenoxid-diolen gut geeignet.

Beim erfindungsgemäßen Verfahren können gegebenenfalls auch Verbindungen D) mit mindestens 2 gegenüber Isocyanaten reaktionsfähigen Wasserstoffatomen und einem Molekulargewicht von 32 bis 400 mitverwendet werden.

Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen

aufweisende Verbindungen, wie sie als Kettenverlängerungsmittel oder Vernetzungsmittel bekannt sind und in den obengenannten Druckschriften beschrieben werden. Diese Verbindungen weisen in der Regel 2 bis 4 gegenüber Isocyanaten reaktionsfähige Wasserstoffatome auf, vorzugsweise 2 oder 3 reaktionsfähige Wasserstoffatome.

Beispielhaft seien für hydroxylgruppenhaltige Verbindungen Ethylenglykol, Propylenglykol, Trimethylenglykol, Butandiol-1,4 und -2,3, Hexandiol-1,6, Neopentylglykol, Diethylenglykol, Dipropylenglykol, Diethanolamin, Triethanolamin, Dipropanolamin und N-Methyl-diethanolamin genannt. Weitere Polyole mit einem Molgewicht zwischen vorzugsweise 62 bis 250 können mitverwendet werden.

Besonders vorteilhafte Ergebnisse zur Herstellung von zelligen Polyurethanelastomeren werden dann erzielt, wenn man entsprechend der deutschen Patentanmeldung P 2 920 502.5 im Reaktionsansatz aus höhermolekularen Polyolen, überschüssigen Polyisocyanaten und gegebenenfalls weiteren niedermolekularen Kettenverlängerungsmitteln neben Wasser untergeordnete Mengen, bezogen auf den NCO-Gehalt der NCO-Präpolymeren bzw. der Reaktionsmischung, als Verbindungen D) aromatische Diamine mitverwendet. Als aromatische Diamine werden dabei solche mit einem Molekulargewicht von 108 bis 400, vorzugsweise von 108 bis 250, verwendet. Insbesonders wirkt sich ein Zusatz von 0,1 bis 0,8 Gew.-%, vorzugsweise 0,15 bis 0,5 Gew.-% an aromatischen Diaminen im gesamten Reaktionsansatz sehr günstig auf eine gleichmäßige Zellstruktur und eine verbesserte Wärmestandfestigkeit aus.

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patenschriften 3 681 290 und 3 736 350), 2 040 650 und 2 160 589 beschriebenen estergruppenhaltigen Diamine, die Ethergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-phenylendiamine (DE-Offenlegungsschriften 2 001 772, 2 025 896 und 2 065 869), 3,3'-Dichlor-4,4'-diamino-diphenylmethan, 2,4- und/oder 2,6-Toluylendiamin und durch 1 oder 2 $C_1$—$C_3$-Alkylgruppen substituiertes Toluylendiamin, z. B. 3,5-Diethyl-2,4- bzw. -2,6-diaminotoluol, 4,4'-Diaminodiphenylmethan und 2,4'-Diaminodiphenylmethan und deren mit 1 bis 4 $C_1$—$C_4$-Alkylgruppen substituierte Derivate, z. B. 3,3'-Dimethyl-4,4'-diaminodiphenylmethan, 3,3,5,5'-Tetraethyl-4,4'-diaminodiphenylmethan, 3,3'-Diisopropyl-4,4'-diaminodiphenylmethan etc., deren mit 1—4 Chlorgruppen substituierte Derivate, 4,4'-Diaminodiphenyldisulfide (DE-Offenlegungsschrift 2 404 976), Diaminodiphenyldithioether (DE-Offenlegungsschrift 2 509 404) sowie durch Alkylthiogruppen substituierte aromatische Diamine (DE-Offenlegungsschrift 2 638 760) genannt. Als Diamine werden bevorzugt solche eingesetzt, welche in ihrer Struktur analog dem angewandten Diisocyanat sind: So werden Toluylendiamin und substituierte Toluylendiamine bevorzugt für die Umsetzung mit 2,4- und 2,6-Toluylendiisocyanat angewandt, während Vorpolymere auf Basis von 4,4'-Diisocyantodiphenylmethan bevorzugt mit — gegebenenfalls substituierten — Diaminodiphenylmethanen umgesetzt werden. Naphthylen-1,5-diisocyanat wird vorteilhaft mit 1,5-Diaminonaphthalin kombiniert, aber auch die Kombination von 1,5-Diaminonaphthalin mit 4,4'-Diisocyanatodiphenylmethan ergibt wertvolle Produkte. Überraschend ist, daß schon sehr kleine Mengen des Diamins, bevorzugt 0,15 bis 0,5 Gew.-%, bezogen auf Gesamtpolyurethan, im Sinne der vorliegenden Erfindung wirken.

Bevorzugt werden 4,4'-Diaminodiphenylmethan und seine Methyl- und Chlor-Substitutionsprodukte, gegebenenfalls in Mischung mit 2,4'-Diamino-diphenylmethan, 1,5-Diaminonaphthalin und die 2,4- und/oder 2,6-Toluylendiamine.

Ganz besonders bevorzugt ist die Kombination 1,5-Naphthylendiisocyanat/1,5-Diamino-naphthalin. Das diprimäre Diamin kann dem Reaktionsansatz in einer beliebigen Verfahrensstufe — z. B. vermischt mit einer der Ausgangskomponenten — zugegeben werden. Am zweckmäßigsten ist es im allgemeinen, das Diamin in Form einer Lösung in der im 2. Verfahrensschritt verwendeten Teilmenge der höhermolekularen Polyhydroxylverbindung einzusetzen. Es ist dabei oft verfahrenstechnisch vorteilhaft, diese Diaminlösung in einem getrennten Verfahrensschritt mit einer kleinen Menge des verwendeten aromatischen Diisocyanats zu versetzen, wobei das molare Verhältnis Diamin : Diisocyanat zwischen 2 : 1 und 10 : 9 liegen soll und infolge der praktisch selektiven Reaktion zwischen NCO- und $NH_2$-Gruppen im Polyol in situ Aminharnstoffe der allgemeinen Formel

$$NH_2—Q'—NH—[CO—NH—Q—NH—CO—NH—Q'—NH]_n—H$$

in einer Menge von etwa 0,2 bis 1 Gew.-%, bezogen auf Polyurethan, gebildet werden, in welcher

n eine ganze Zahl zwischen 1 und 11 bedeutet,
Q den Rest darstellt, welcher durch Entfernung der NCO-Gruppen aus dem Diisocyanat entsteht und
Q' für den Rest steht, welcher bei der Entfernung der Aminogruppen aus dem Diamin entsteht.

Eine zweite bevorzugte Arbeitsweise besteht darin, das Diamin bereits dem NCO-Präpolymer der 1. Verfahrensstufe, gegebenenfalls schon bei dessen Herstellung, zuzusetzen, wobei ein mit geringen Mengen an Harnstoffgruppen modifiziertes NCO-Präpolymer erhalten wird. Gemäß einer Variante dieser Arbeitsweise stellt man das Diamin in situ im Präpolymer her, indem man anstelle des Diamins eine

äquivalente Menge an Wasser zusetzt, welche das Diisocyanat unter Verseifung in das entsprechende Diamin umwandelt.

Im erfindungsgemäßen Verfahren können gegebenenfalls die unter E) angeführten Katalysatoren, weitere Treibmittel, Schaumstabilisatoren, Pigmente, Stabilisatoren gegen Alterung und Witterungseinflüsse sowie andere an sich bekannte Hilfs- und Zusatzstoffe mitverwendet werden, wie sie in den obengenannten Druckschriften eingehend beschrieben und allgemein bekannt sind.

Auch oberflächenaktive Zusatzstoffe, wie Emulgatoren und Schaumstabilisatoren können mitverwendet werden. Als Emulgatoren kommen z. B. die Natriumsalze von Ricinusöl-sulfonaten oder Salze von Fettsäuren mit Aminen wie ölsaures Diethylamin oder stearinsaures Diethanolamin infrage. Auch Alkali- oder Ammoniumsalze von Sulfonsäuren wie etwa von Didecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Bevorzugt wird beim erfindungsgemäßen Verfahren Wasser sowohl als Kettenverlängerungsmittel als auch als Treibmittel eingesetzt. Neben Wasser können die beispielhaft genannten Kettenverlängerungsmittel jedoch mitverwendet werden. Das Wasser wird im allgemeinen in einer Menge von 0,5 bis 2 Gew.-%, bezogen auf Gesamtgemisch aller anderen Reaktionspartner, vorzugsweise in einer Menge von 0,7 bis 1,2 Gew.-%, eingesetzt. Vorzugsweise gelangt das Wasser in Form einer wäßrigen Lösung eines Emulgators der oben beispielhaft genannten Art zum Einsatz. Hierdurch wird eine innige Durchmischung des Wassers mit den übrigen Reaktionsteilnehmern gewährleistet.

Vorzugsweise wird bei der Herstellung der zelligen Polyurethanelastomer-Formkörper nach dem bekannten Präpolymerverfahren gearbeitet, d. h. es wird aus dem höhermolekularen Polyol und dem Diisocyanat in einem NCO/OH-Äquivalentverhältnis von 1,5 : 1 bis 3 : 1, vorzugsweise 1,8 : 1 bis 2,2 : 1 ein Isocyanatgruppen aufweisendes Präpolymer hergestellt, welches anschließend mit der genannten Wassermenge zur Umsetzung gelangt. Ein Arbeiten nach dem bekannten »one shot«-Verfahren ist möglich, jedoch keinesfalls bevorzugt. Im Falle der Mitverwendung organischer Kettenverlängerungsmittel kommen diese in den bei der Herstellung von Polyurethanelastomeren üblichen Mengen oder in nur geringen modifizierenden Mengen, wie für die aromatischen Diamine beschrieben, zum Einsatz.

Die Herstellung der Polyurethanelastomeren erfolgt im übrigen unter Verwendung solcher Mengen der einzelnen Reaktionspartner, daß eine Isocyanatkennzahl von 100 bis 115 vorliegt. Dies gilt sowohl für die bevorzugte Umsetzung von NCO-Präpolymeren mit Wasser als auch für die Mengenverhältnisse der einzelnen Reaktionspartner beim erfindungsgemäß weniger bevorzugten »one shot«-Verfahren.

Die Menge des in die Form einzutragenden Reaktionsgemischs wird so bemessen, daß das o. g. Raumgewicht von 0,3 bis 0,8 g/cm$^3$ resultiert. Zur Herstellung der Reaktionsgemische und zum Befüllen der Form kann man sich maschineller Einrichtungen bedienen, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Als Formmaterial kommt Metall, z. B. Aluminium, oder Kunststoff, z. B. Epoxidharz, infrage. In der Form schäumt das schäumfähige Reaktionsgemisch auf und bildet den Formkörper.

Erfindungswesentlich ist die Mitverwendung von 0,1 bis 3 Gew.-%, vorzugsweise 0,3 bis 2 Gew.-%, bezogen auf gesamten Reaktionsansatz, eines oder mehrerer Polysiloxane (F) der oben definierten allgemeinen Formel (I). Die Polysiloxane können zu einem beliebigen Zeitpunkt während der Herstellung des zelligen Polyurethanelastomeren zugesetzt werden.

Vorzugsweise setzt man sie — wenn nach dem »one shot«-Verfahren gearbeitet wird — zusammen mit der Polyolkomponente ein. Beim Präpolymerverfahren werden sie bevorzugt entweder dem NCO-Präpolymeren der 1. Verfahrensstufe oder der in der 2. Verfahrensstufe verwendeten Polyolkomponente beigemischt.

Polysiloxane der allgemeinen Formel (I), bei welchen X dieselbe Bedeutung wie Z hat, sind als chemisch inerte Siliconöle seit langem bekannt. Ihre Herstellung sowie physikalisch-chemische Eigenschaften dieser Produkte werden in W. Noll, »Chemie und Technologie der Silicone«, 2. Auflage 1968, Verlag Chemie, Weinheim/Bergstraße, BRD, ausführlich beschrieben. Für die Zwecke der vorliegenden Erfindung kommen dabei insbesondere solche Siliconöle in Betracht, die im Durchschnitt etwa 5 bis 400, besonders bevorzugt 20 bis 250, Siloxaneinheiten aufweisen und bei denen X und Z für Methylgruppen bzw. anteilig (bis zu ca. 50 %) auch für Phenylgruppen stehen. Spezielle Polysiloxane dieser Art werden z. B. auch in DE-OS 2 232 525 beschrieben. Siliconöle werden im erfindungsgemäßen Verfahren vorzugsweise nur in Mengen von 0,1 bis 2 Gew.-%, insbesondere 0,3 bis 1 Gew.-%, bezogen auf gesamten Reaktionsansatz, zugesetzt, da bei höheren Anteilen eine Verschlechterung der mechanischen Eigenschaften der Formkörper eintreten kann.

Erfindungsgemäß bevorzugt sind jedoch solche Polysiloxane, welche mindestens eine, vorzugsweise 1 bis 5, besonders bevorzugt 2 gegenüber Isocyanaten reaktive, »organofunktionelle« Gruppen, insbesondere Hydroxyl- oder Aminogruppen, aufweisen (»Organopolysiloxane«). Verbindungen dieser Art sind in den deutschen Auslegeschriften 1 114 632, 1 190 176 und 1 248 287, sowie der französischen Patenschrift 1 291 937 beschrieben. Sie enthalten zumindest zwei an Silicium gebundene carbofunktionelle Gruppen mit gegenüber Isocyanaten reaktionsfähigen Wasserstoffatomen. Die carbofunktionellen Gruppen sind vorzugsweise aliphatische, gegebenenfalls Heteroatome enthaltende Kohlenwasserstoffreste mit 1 bis 6 C-Atomen, die mindestens eine Hydroxyl-, Carboxyl-, Mercapto- oder primäre bzw. sekundäre Aminogruppe aufweisen.

Solche carbonfunktionellen Reste sind beispielsweise

Hydroxymethyl
$-CH_2OH$
Hydroxylbutyl
$-(CH_2)_4OH$
β-Hydroxyethyloxymethyl
$-CH_2-O-CH_2-CH_2-OH$
β-Hydroxyethylmercaptomethyl
$-CH_2-S-CH_2-CH_2-OH$
β, -Dihydroxypropylmercaptomethyl
$-CH_2-S-CH_2-CHOH-CH_2OH$
Mercaptomethyl
$-CH_2SH$
β-Mercaptoethylmercaptomethyl
$-CH_2-S-CH_2-CH_2-SH$
β-Carboxylethyl
$-CH_2-CH_2-COOH$
Aminomethyl
$-CH_2-NH_2$
-Aminobutyl
$-(CH_2)_4-NH_2$
n-Butylaminomethyl
$-CH_2-NH-C_4H_9$ oder
Cyclohexylaminomethyl
$-CH_2-NH-C_6H_{11}$

Die Organopolysiloxane sind nach bekannten Verfahren zugänglich. Beispielsweise können die besonders geeigneten Hydroxymethylpolysiloxane durch direkte Umsetzung von Brommethylpolysiloxanen mit alkoholischer Kalilauge dargestellt werden. 4-Aminobutylpolysiloxane werden über die Hydrierung der leicht zugänglichen Nitrile hergestellt, entsprechende Carboxylderivate durch Verseifung der Cyanoalkylsiliciumverbindungen. Aminomethylsiloxane werden durch Aminierung der Halogenmethylsiliciumverbindungen mit Ammoniak oder primären Aminen gewonnen.

In vielen Fällen werden die funktionellen Gruppen zunächst an niedermolekularen Siloxanen eingeführt; die so gewonnenen Produkte werden dann durch die bekannte Äquilibrierungsreaktion in höhermolekulare Polysiloxane übergeführt.

Erfindungsgemäß bevorzugt sind Organopolysiloxane mit mindestens 2, insbesondere 5 bis 100, Siloxangruppen und mit einem Molekulargewicht von 194 bis 8000, besonders bevorzugt zwischen 800 und 3000. Bevorzugt sind ferner im wesentlichen lineare organofunktionelle Polysiloxane und solche mit endständigen Hydroxy- oder Aminogruppen.

Für das erfindungsgemäße Verfahren sind beispielsweise folgende organofunktionelle Polysiloxane geeignet:

$$HO-CH_2-Si(CH_3)_2-O[Si(CH_3)_2-O]_n-Si(CH_3)_2-CH_2OH$$

n = 1 bis 100

$$HO-\underset{\displaystyle CH_3}{\underset{|}{CH}}-CH_2-[Si(CH_3)_2-O]_n-Si(CH_3)_2-CH_2-O-\underset{\displaystyle CH_3}{\underset{|}{CH}}-CH_2-OH$$

n = 1 bis 100

$$C_4H_9-NH-CH_2Si(CH_3)_2-O-[Si(CH_3)_2-O]_n-\underset{\displaystyle CH_2-NH-C_4H_9}{\underset{|}{Si(CH_3)_2}}$$

n = 5 bis 60

oder

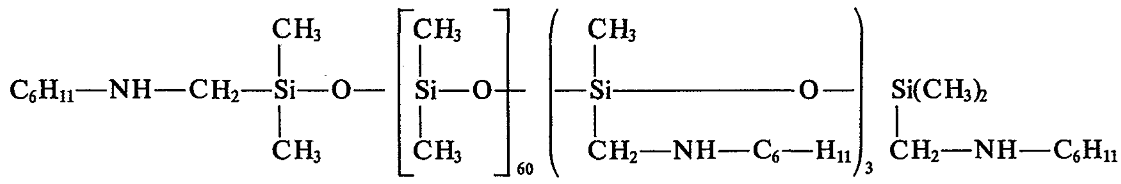

Die erfindungsgemäß besonders bevorzugten Organopolysiloxane entsprechen der allgemeinen Formel

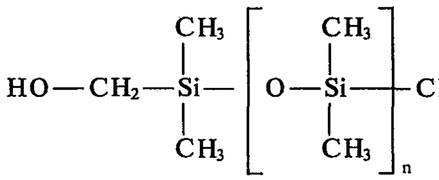

n = 5 bis 30

Sie werden in an sich bekannter Weise durch Äquilibrierung von 1,1,3,3-Tetramethyl-1,3-hydroxymethyldisiloxan der Formel

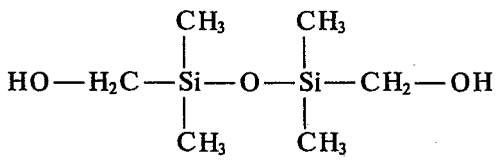

mit Octamethylcyclotetrasiloxan in Gegenwart von Schwefelsäure bzw. nach dem Verfahren der DE-AS 1 236 505 hergestellt.

Die Organopolysiloxane können im erfindungsgemäßen Verfahren direkt als solche eingesetzt werden. Bevorzugt ist es jedoch, sie in einem vorgeschalteten Verfahrensschritt zunächst in ein Präpolymer überzuführen. Zu diesem Zweck werden sie mit einem der oben genannten Polyisocyanate in einem Äquivalentverhältnis NCO/aktives H von ca. 1,5 : 1 bis 3 : 1, bevorzugt etwa 2 : 1, präpolymerisiert. Besonders bevorzugt ist es, das so erhaltene NCO-Präpolymer in einem weiteren Schritt durch Umsetzung mit einem niedermolekularen und/oder höhermolekularen Polyol in ein OH-Präpolymer überzuführen und erst dieses dem Reaktionsansatz für die Herstellung von zellulären Formkörpern zuzusetzen.

Die Umsetzung zwischen dem organofunktionellen Polysiloxan und dem Polyisocyanat erfolgt vorzugsweise im Temperaturbereich zwischen 30 und 100°C, gegebenenfalls unter Mitverwendung geeigneter Katalysatoren, wie z. B. zinnorganischer Verbindungen wie Zinn-(II)-acetat, Zinn-(II)-octoat, Zinn-(II)-alkylhexoat oder Dibutyl-Zinndiacetat. Gegebenenfalls eingesetzte überschüssige Mengen an Polyisocyanat können gegebenenfalls vor der nächsten Reaktionsstufe durch Dünnschichtdestillation entfernt werden. Es ist jedoch auch möglich, einen gegebenenfalls vorliegenden Überschuß an nicht umgesetztem Polyisocyanat im Reaktionsgemisch zu belassen und dieses Gemisch der nächsten Reaktionsstufe zuzuführen.

Diese nächste Reaktionsstufe besteht in der Umsetzung der NCO-Polysiloxan-Präpolymeren mit im Sinne der Isocyanat-Polyadditionsreaktion mindestens difunktionellen Alkoholen bzw. Aminoalkoholen. Bei diesen Reaktionskomponenten handelt es sich, wie gesagt, um im Sinne der Isocyanat-Additionsreaktion mindestens difunktionelle, vorzugsweise trifunktionelle, Verbindungen des Molekulargewichtsbereichs 62 bis 5000, vorzugsweise 105 bis 300, die vorzugsweise außer alkoholischen, d. h. aliphatisch gebundenen, Hydroxylgruppen, sowie primären oder sekundären nicht-aromatisch gebundenen Aminogruppen keine weiteren mit Isocyanatgruppen reaktionsfähige Gruppen aufweisen. Die Verbindungen können jedoch im Sinn der Isocyanat-Additionsreaktion indifferente Heteroatome, beispielsweise in Form von Etherbrücken, tert.-Stickstoffatomen, Amid- oder Estergruppen enthalten. Besonders bevorzugt sind solche Verbindungen der genannten Art, die mit Isocyanatgruppen reaktionsfähige Gruppen einer unterschiedlichen Reaktivität aufweisen, wie insbesondere Aminoalkohole mit einer primären oder sekundären Aminogruppe und zwei alkoholischen Hydroxylgruppen. Typische Beispiele hierfür sind

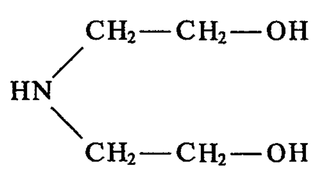

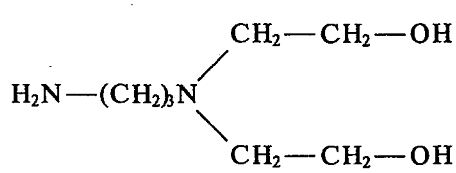

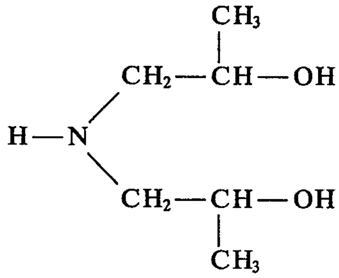

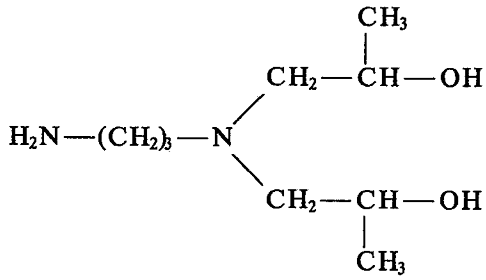

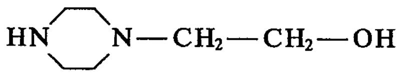

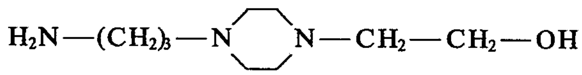

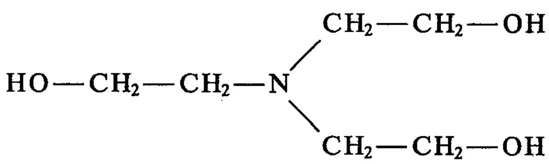

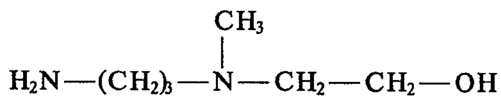

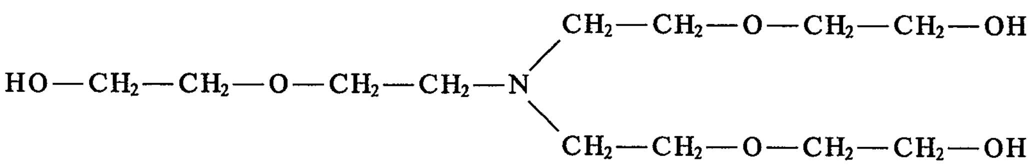

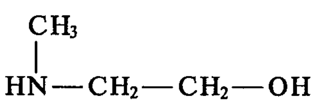

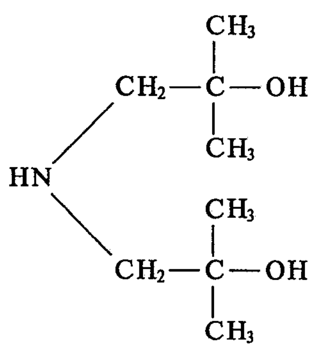

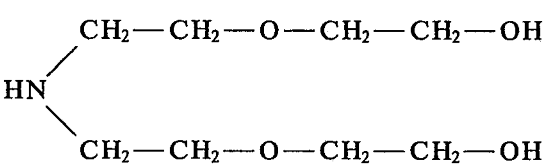

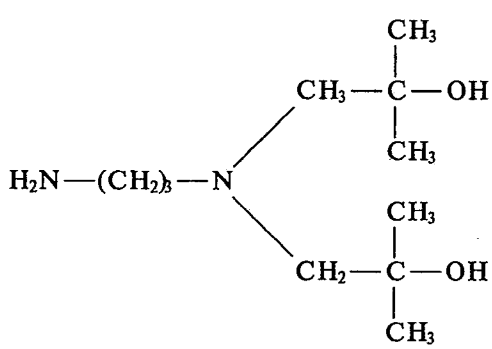

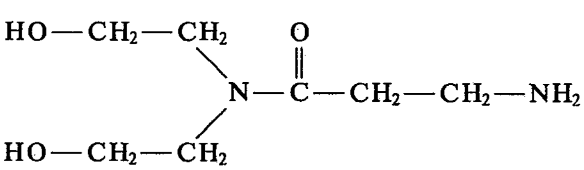

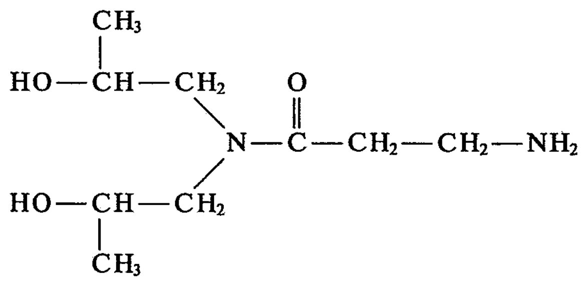

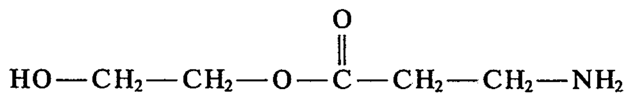

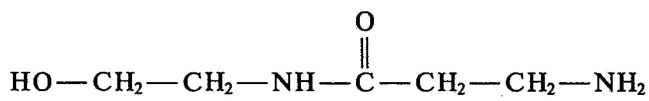

Die Alkoxylierungsprodukte dieser beispielhaft genannten Verbindungen können ebenfalls eingesetzt werden, sind jedoch weniger bevorzugt. Ferner geeignet sind beispielsweise die in der deutschen Patentanmeldung P 2 936 239.8 beschriebenen Aminoalkohole oder die in DE-OS 2 756 270 aufgeführten Hydrierungsprodukte, sowie hydroxy- und/oder aminopolyhydroxyfunktionelle Verbindungen auf Kohlehydratbasis, z. B. Glukosamin und Galaktosamin; der Einsatz dieser Verbindungen ist allerdings gegenüber den eingangs beispielhaft erwähnten Ausgangsmaterialien weniger bevorzugt. Die Umsetzung der NCO-Polysiloxan-Präpolymeren mit den amino-polyhydroxy-funktionellen Verbindungen, zum Beispiel den erfindungsgemäß bevorzugten Aminoalkoholen, wie sie auf Seite 25, 26 und 27 bis Zeile 5 beschrieben sind, kann auch in Mischung mit höhermolekularen Polyhydroxylverbindungen B) erfolgen.

Bei der Herstellung der Umsetzungsprodukte aus dem NCO-Polysiloxan-Präpolymer und dem Polyol und/oder Aminoalkohol werden die Ausgangsmaterialien im allgemeinen in einem Äquivalentverhältnis zwischen Isocyanatgruppen und aktiven Wasserstoffatomen von 1 : 1,5 bis 1 : 6, vorzugsweise 1 : 2 bis 1 : 4 eingesetzt. Besonders bevorzugt wird dabei ein NCO/NH-Verhältnis von ca. 1 : 1 eingehalten. Die Umsetzung erfolgt im allgemeinen im Temperaturbereich zwischen 30 bis 100°C, gegebenenfalls unter Mitverwendung der bereits oben beispielhaft genannten, die Isocyanat-Additionsreaktion beschleunigenden Katalysatoren. Die so erhaltenen OH-Präpolymeren weisen bevorzugt eine Hydroxylfunktionalität von 2 bis 4, einen Gehalt an endständigen Hydroxylgruppen von 0,8 bis 5 und einen Gehalt an Struktureinheiten der Formel $-O-Si(R)_2-$ von 30 bis 90 Gew.-% auf.

Besonders gute Ergebnisse werden erhalten, wenn man im erfindungsgemäßen Verfahren Organopolysiloxane (welche gegebenenfalls in der beschriebenen Weise modifiziert wurden) in Kombination mit den oben erwähnten inerten Siliconölen (X=Z) einsetzt, wobei das Gewichtsverhältnis der beiden Polysilocankomponenten zwischen 4 : 1 und 1 : 4, besonders bevorzugt zwischen 2 : 1 und 1 : 2, liegt.

Eine weitere Verbesserung der Eigenschaften der erfindungsgemäß hergestellten Formkörper wird erzielt, wenn man sie an der Oberfläche mit einer durchgehenden, dichten, nicht porösen Haut mit einer Dicke von 0,05 bis 1 mm, vorzugsweise 0,1 bis 0,5 mm, besonders bevorzugt 0,2 bis 0,3 mm, aus Polyurethan oder Polyurethanharnstoff als Versiegelung versieht.

Die Herstellung der Haut auf der Oberfläche des Formkörpers kann durch Tauchen bzw. Besprühen des Formteils, vorzugsweise jedoch durch Besprühen der Form selbst, im sogenannten In-mouldcoating-Verfahren erfolgen. Infrage kommen alle an sich bekannten 1- bzw. 2-Komponenten-Polyurethan-Lacke auf Basis der obengenannten Ausgangsverbindungen, wobei jedoch aus aliphatischen bzw. cycloaliphatischen Verbindungen bestehende Kompositionen bevorzugt sind. Aus ökologischen Gesichtspunkten bzw. Gründen des Umweltschutzes werden wäßrige Lösungen oder Dispersionen von Polyurethan bzw. Polyurethan-Harnstoffen bevorzugt, wobei ionische und emulgatorfreie Produkte aus Gründen der Haftung besonders bevorzugt sind.

Die im erfindungsgemäßen Verfahren zur Oberflächenversiegelung einzusetzenden Ein- und Zweikomponenten-Polyurethane sind aus der Lack- und Beschichtungstechnik an sich bekannt. Die sogenannten »Zweikomponenten-Polyurethane« sind Reaktivsysteme, welche beispielsweise aus einem Isocyanatgruppen aufweisenden Voraddukt und einem geeigneten Kettenverlängerungsmittel (meist einem aromatischen Diamin) bestehen, welche getrennt oder gemeinsam, mit einem Lösungsmittel verdünnt, auf den zu versiegelnden Formkörper durch Tauchen oder Sprühen aufgetragen werden.

Lacke dieser Art werden beispielsweise in den deutschen Patentschriften 838 826, 872 268, der DE-AS 1 023 449, der DE-AS 1 240 656 (US-Patent 3 281 396) sowie insbesondere der DE-OS 1 570 524 (US-Patent 3 475 266) beschrieben.

Umgekehrt ist es selbstverständlich auch möglich, Zweikomponenten-Polyurethane aus einem niedermolekularen Polyisocyanat und einem relativ hochmolekularen Voraddukt aufzubauen, welches noch gegenüber Isocyanaten reaktive Gruppen aufweist. Ein derartiges System wird z. B in der DE-OS 2 221 756 (US-Patent 3 904 796) beschrieben.

Im Gegensatz zu den seit längerem bekannten Zweikomponenten-Polyurethanen sind die sogenannten Einkomponenten-Polyurethane neuerer Stand der Technik. Diese bereits voll ausreagierten, hochmolekularen Produkte werden durch Umsetzung von Polyhydroxylverbindungen, in der Praxis vor allem Dihydroxypolyestern oder Dihydroxypolyethern, im Gemisch mit Glykolen, vorzugsweise Ethylenglykol oder Butandiol, mit aromatischen Diisocyanaten, bevorzugt 4,4'-Diphenylmethandiisocyanat, erhalten. Diese sowohl in der Schmelze als auch in Lösung herstellbaren, im wesentlichen linearen Polyurethane werden in Form von Lösungen bzw. Lösungsmittelgemischen eingesetzt, welche Dimethylformamid und/oder andere hochpolare Verbindungen enthalten. Ein Vorteil der Einkomponenten-Polyurethane ist ihre praktisch unbegrenzte Topfzeit. Neben den aus aromatischen Diisocyanaten aufgebauten sogenannten aromatischen Einkomponenten-Polyurethane gehören zum Stand der Technik auch die sogenannten aliphatischen Einkomponenten-Polyurethane; es handelt sich dabei um Polyurethanharnstoffe aus höhermolekularen Dihydroxyverbindungen, aliphatischen Diisocyanaten und aliphatischen Diaminen bzw. Bishydraziden, Bissemicarbaziden und Bis-Carbazinsäureestern als Kettenverlängerer. Diese aliphatischen Einkomponenten-Polyurethane werden aus Lösungsmittelgemischen, die neben aromatischen Kohlenwasserstoffen sekundäre oder primäre Alkohole enthalten, appliziert.

Erfindungsgemäß bevorzugt ist es jedoch, zur Oberflächenversiegelung wäßrige Lösungen und insbesondere filmbildende wäßrige Dispersionen von Polyurethanen oder Polyurethanharnstoffen einzusetzen, wie sie ebenfalls aus der Beschichtungsindustrie an sich bekannt sind.

Die Polyurethandispersionen können anionische, kationische und/oder nichtionogene Dispersionszentren enthalten, gegebenenfalls auch externe Emulgatoren.

Geeignete wäßrige Polyurethan-Dispersionen und -Lösungen werden beispielsweise von D. Dieterich et al. in J. Oil Col. Chem. Assoc. 1970, 53, Seite 363–379, in Die Angewandte Makromolekulare Chemie, 1972, 26, Seite 85–106, in Angewandte Chemie 1970, 82, Seite 53–63, in US-PS 4 086 193 (ionische Dispersionen), sowie in den DE-Offenlegungsschriften 2 550 860, 1 495 745 (US-Patent 3 479 310), 1 495 770 (US-Patent 3 535 274), 1 495 847 (Can.-Patent 764 009), 1 770 068 (US-Patent 3 756 992), 2 314 512, 2 141 807, 2 314 513 sowie 2 343 294 (US-PS 3 989 869) beschrieben.

Wäßrige Polyurethanlösungen werden darüber hinaus noch in den französischen Patentschriften 2 308 646 und 2 331 581 sowie in DE-OS 2 730 514 beschrieben.

Bevorzugte Polyurethandispersionen sind solche aus Polyhydroxypolyestern, Hexan- und/oder Isophorondiisocyanat und Ethylendiamin-ethylsulfonat der Formel

$$H_2N—CH_2—CH_2—NH—CH_2—CH_2—SO_3Na$$

Erfindungsgemäß ist es häufig bevorzugt, solche wäßrige Polyurethandispersionen bzw. -lösungen einzusetzen, welche nachträglich vernetzbar sind. Die kann z. B. durch Einführung von N-Methylolgruppen (z. B. durch Behandlung mit Formaldehyd) geschehen, welche – vorzugsweise in Gegenwart saurer Katalysatoren – in an sich bekannter Weise unter Ausbildung von Methylengruppen vernetzen.

Die Herstellung der Oberflächenversiegelung der Formkörper erfolgt durch nachträgliches Auftragen der beispielhaft genannten Beschichtungsmittel bzw. Dispersionen auf den vorgefertigten Formkörper oder vorzugsweise durch Beschichten der Innenseite der Form vor der Befüllung der Form mit einem der beispielhaft genannten Beschichtungsmittel bzw. mit einer der beispielhaft genannten Dispersionen. Nach dieser Beschichtung der Forminnenwand wird zunächst die Haut durch Ausreagieren bzw. Antrocknen der Beschichtung hergestellt. Im allgemeinen kommen die Beschichtungsmittel bzw. Dispersionen in solchen Mengen zum Einsatz, daß eine dichte Haut einer Dicke von 0,05 bis 1 mm, vorzugsweise 0,1 bis 0,5 mm, besonders bevorzugt 0,2 bis 0,3 mm resultiert.

Die erfindungsgemäß hergestellten Formkörper eignen sich vor allem als Federungselemente, inclusive Dämpfungs- und Anschlagpuffer aller Art, sowie Dichtungen für Kraftfahrzeuge, insbesondere Automobile.

Die folgenden Beispiele erläutern das erfindungsgemäße Verfahren. Wenn nicht anders vermerkt, sind Mengenangaben als Gewichtsteile bzw. Gewichtsprozente zu verstehen.

Die Versuche wurden auf Rührwerkmaschinen, wie sie für die Verarbeitung von flüssigen Polyurethansystemen üblich sind (SK- bzw. EZ-AB-Maschinen der Fa. Hennecke), durchgeführt.

Als Formteil wurden Pufferelemente mit einem Raumgewicht von ca. 500 $g/dm^3$ in entsprechenden Formen, deren Einfüllöffnungen durch einen Deckel über Kniehebel verschlossen wurden, hergestellt. An den beschichteten bzw. unbeschichteten Pufferelementen wurde die Wasseraufnahme nach verschiedenen Verformungsgraden, zum Teil vor und nach dynamischer Prüfung unter Wasser, ermittelt.

Die Prüfkörper zur Ermittlung der dynamischen Eigenschaften wurden quaderförmigen Formteilen entnommen. Die aus Stahl bestehende Form hatte einen quadratischen Grundriß von 120 × 120 mm, eine Höhe von 100 mm und wurde oben durch eine Stahlplatte verschlossen, welche durch Kniehebel auf den 1 cm breiten Rand der Form aufgepreßt wurde.

Das in Beispiel 1 verwendete Silikonöl entspricht der allgemeinen Formel

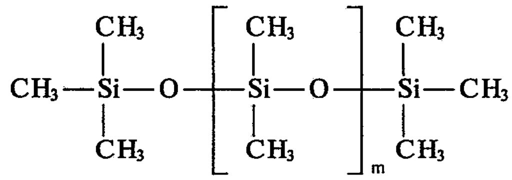

wobei m einen Durchschnittswert von ca. 200 besitzt.

Das in Beispiel 1, 2 und 3 eingesetzte Organopolysiloxan besitzt die allgemeine Formel

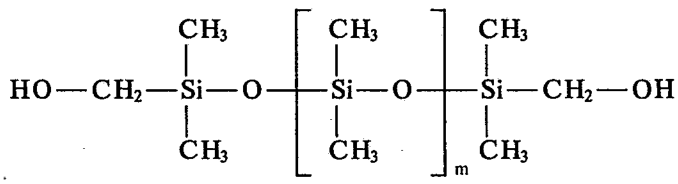

wobei m einen mittleren Wert von 10 bis 13 aufweist.

Dieses Organopolysiloxan wird ebenfalls zur Herstellung der in den weiteren Beispielen eingesetzten Organopolysiloxan-Präpolymeren verwendet.

## Beispiel 1

### a) Vergleichsversuch

Es wurde ein Präpolymer aus 100 Teilen eines linearen Ethandiol-Polyadipats (Molekulargewicht 2000) und 24 Teilen 1,5-Naphthylendiisocyanat hergestellt.

Dann wurden 2,15 Teile einer 50 %igen wäßrigen Lösung eines Fettsäure-Sulfonates mit 124 Teilen des Präpolymers intensiv vermischt und in die 70°C warme Form gefüllt. Das nach einer Ausheizzeit von 30 Minuten bei 90°C erhaltene Formteil zeigte im Druckversuch unter Wasser nach mehreren Verformungen eine beträchtliche Wasseraufnahme. Die dabei ermittelten Meßwerte sind in Tabelle 1 zusammengestellt.

### b) Erfindungsgemäßes Verfahren

Zunächst wurden 100 Teile des genannten linearen Ethandiol-Polyadipats mit der in Tabelle 1 angegebenen Menge an Organopolysiloxan und/oder Siliconöl versetzt. Mit dieser Mischung und 24 Teilen 1,5-Naphthylendiisocyanat wurde dann das Präpolymer hergestellt.

Anschließend wurden 2,12 Teile einer 50 %igen wäßrigen Lösung des Fettsäure-Sulfonates mit 125,25 Teilen des Präpolymers intensiv vermischt und in die 70°C warme Form gefüllt. Das nach der Entformung erhaltene Formteil zeigte im Druckversuch unter Wasser eine erheblich reduzierte Wasseraufnahme gegenüber dem Vergleichsversuch.

Tabelle 1

Wasseraufnahme nach 55 % Deformation des Formkörpers unter Wasser (15 Zyklen; Verformungsgeschwindigkeit: 100 mm/min).

| Polysiloxan (Teile) | Nullgewicht (g) | Wasseraufnahme (g) | (%) |
|---|---|---|---|
| – | 107,44 | 71,88 | 66,9 |
| 0,75 Siliconöl | 106,99 | 1,29 | 1,21 |
| 0,75 Organopolysiloxan | 105,10 | 0,71 | 0,68 |
| 0,50 Siliconöl + 0,25 Organopolysiloxan | 103,11 | 0,52 | 0,5 |

## Beispiel 2

Beispiel 1 b) wurde wiederholt, jedoch unter Verwendung von 0,75 Teilen eines Polysiloxanpräpolymers, welches durch Umsetzung von 2 Mol des Organopolysiloxans mit 3 Mol Toluylendiisocyanat (80 %2,4-Isomeres) und danach einer zur Zahl der freien NCO-Gruppen äquimolaren Menge an Diäthanolamin erhalten worden war.

Der Druckversuch wurde gegenüber Beispiel 1 insofern verschärft, als das Formteil sowohl in komprimierten als auch im entspannten Zustand jeweils 2 Minuten belassen wurde, bevor der nächste Zyklus begonnen wurde. Trotzdem ist die Wasseraufnahme außerordentlich gering:

Tabelle 2

| Nullgewicht (g) | Wasseraufnahme (g) | (%) |
|---|---|---|
| 109,77 | 0,56 | 0,51 |

## Beispiel 3

Beispiel 1 b wurde unter Verwendung von jeweils 0,75 Teilen verschiedener, nachstehend näher beschriebener OH-Polysiloxan-Präpolymere wiederholt. Die Ergebnisse sind unten in Tabelle 3 zusammengestellt.

a) Herstellung von modifizierten Organopolysiloxanen A bis J

A) In 1400 g eines $\alpha,\omega$-Hydroxymethyl-polydimethylsiloxans der OH-Zahl 80 werden 252 g Hexamethylendiisocyanat getropft; man erwärmt auf 50°C, bis das Prepolymer einen NCO-Gehalt von 2,54 %erreicht hat, fügt dann bei 50°C unter Rühren 105 g Diethanolamin zu und beläßt auf dieser Temperatur, bis kein NCO mehr nachweisbar ist.
Man erhält ein modifiziertes Polysiloxan mit einer Viskosität von 550 mPas/25°C, einer Hydroxylfunktionalität von 4, einem Gehalt an endständigen Hydroxylgruppen von 2 %und einem Gehalt an Dimethylsiloxan-Einheiten von 71 Gew.-%.

B) In 1400 g eines $\alpha,\omega$-Hydroxymethyl-polydimethylsiloxans der OH-Zahl 80 werden 252 g Hexamethylendiisocyanat getropft; man erwärmt auf 50°C, bis das Prepolymer einen NCO-Gehalt von 2,54 % erreicht hat, fügt dann bei 50°C 281 g Tris-[2-(2-hydroxyethoxy)-ethyl]-amin hinzu und beläßt auf dieser Temperatur, bis kein NCO mehr nachweisbar ist. Man erhält ein modifiziertes Organopolysiloxan der Viskosität 920 mPas/25°C, der Hydroxylfunktionalität 4, mit einem Gehalt an endständigen Hydroxylgruppen von 1,6 Gew.-% und einem Gehalt an Dimethylsiloxan-Einheiten von 65 Gew.-%.

C) In 1400 g eines $\alpha,\omega$-Hydroxymethyl-polydimethylsiloxans der OH-Zahl 80 werden 252 g Hexamethylendiisocyanat getropft; man erwärmt auf 50°C, bis das Prepolymer einen NCO-Gehalt von 2,54 % erreicht hat, fügt dann bei 50°C 133 g Diisopropanolamin zu und beläßt auf dieser Temperatur, bis kein NCO mehr nachweisbar ist.
Man erhält ein modifiziertes Organopolysiloxan der Viskosität 35 950 mPas/25°C, der Hydroxylfunktionalität 4, mit einem Gehalt an endständigen Hydroxylgruppen von 1,9 Gew.-% und einem Gehalt an Dimethylsiloxan-Einheiten von 76 Gew.-%.

D) In 570 g eines $\alpha,\omega$-Hydroxymethyl-polydimethylsiloxans der OH-Zahl 200 werden 252 g Hexamethylendiisocyanat getropft; man erwärmt auf 50°C, bis das Prepolymer einen NCO-Gehalt von 5,12 % erreicht hat, fügt dann bei 50°C 133 g Diisopropanolamin zu und beläßt auf dieser Temperatur, bis kein NCO mehr nachweisbar ist.
Man erhält ein modifiziertes Organopolysiloxan der Viskosität 31 500 mPas/25°C, der Hydroxylfunktionalität 4, mit einem Gehalt an endständigen Hydroxylgruppen von 1,7 Gew.-% und einem Gehalt an Dimethylsiloxan-Einheiten von 70 Gew.-%.

E) 1100 g eines $\alpha,\omega$-Hydroxymethyl-polydimethylsiloxans der OH-Zahl 80 werden mit 60 g Hexamethylendiisocyanat und 0,2 g Zinn-(II)-ethylhexoat auf 90°C erwärmt, bis kein NCO mehr nachweisbar ist.
Das vorverlängerte Polysiloxan wird mit 99 g Hexamethylendiisocyanat bei einer Temperatur von 50°C bis zu einem NCO-Gehalt von 1,3 % umgesetzt, dann werden 40 g Diethanolamin zugesetzt und das Reaktionsgemisch auf dieser Temperatur belassen, bis kein NCO mehr nachweisbar ist. Man erhält ein pastenartiges, modifiziertes Organopolysiloxan der Hydroxylfunktionalität 4, mit einem Gehalt an endständigen Hydroxylgruppen von 0,99 Gew.-% und einem Gehalt an Dimethylsiloxan-Einheiten von 87 Gew.-%.

F) 1400 g eines α,ω-Hydroxymethyl-polydimethylsiloxans der OH-Zahl 56 und 212 g Hexamethylendiisocyanat werden auf 50°C erwärmt, bis ein NCO-Gehalt von 2,54% erreicht ist. Man setzt dann 1970 g eines auf Isopropanol/Wasser gestarteten Polypropylenoxids der OH-Zahl 56 zu und hält auf 50°C, bis kein NCO mehr nachweisbar ist. Man erhält ein modifiziertes Organopolysiloxan der Viskosität 360 mPas/25°C, der Hydroxylfunktionalität 2, mit einem Gehalt an endständigen Hydroxylgruppen von 0,94 Gew.-% und einem Gehalt an Dimethylsiloxan-Einheiten von 37 Gew.-%.

G) 1400 g eines α,ω-Hydroxymethyl-polydimethylsiloxans der OH-Zahl 56 und 375 g 4,4'-Diisocyanatodiphenylmethan werden bei 50°C zu einem NCO-Präpolymeren mit einem NCO-Gehalt von 2,4 Gew.-% umgesetzt. Anschließend werden 105 g Diethanolamin hinzugefügt und die Temperatur bei 50°C gehalten, bis kein NCO mehr nachweisbar ist. Man erhält ein modifiziertes Organopolysiloxan der Viskosität 26 500 mPas/50°C, der Hydroxylfunktionalität 4, mit einem Gehalt an endständigen Hydroxylgruppen von 1,8 Gew.-% und einem Gehalt an Polydimethylsiloxan-Einheiten von 72 Gew.-%.

H) 840 g eines α,ω-Hydroxymethylpolydimethylsiloxans mit einer OH-Zahl von 80 und 156 g eines Gemisches aus 2,4- und 2,6-Toluylendiisocyanat (80 : 20) werden bis zu einer NCO-Zahl von 1,26% auf 50°C erwärmt; das Präpolymere wird dann mit 32 g Diethanolamin versetzt und das Reaktionsgemisch auf dieser Temperatur gehalten, bis kein NCO mehr nachweisbar ist. Man erhält ein modifiziertes Organopolysiloxan mit einer Viskosität von 1530 mPas/25°C, der Hydroxylfunktionalität 4, einem Gehalt an endständigen Hydroxylgruppen von 1,0 Gew.-% und einem Gehalt an Dimethylsiloxan-Einheiten von 83 Gew.-%.

I) 570 g eines α,ω-Hydroxymethylpolydimethylsiloxans der OH-Zahl 197 und 252 g Hexamethylendiisocyanat werden bis zu einer NCO-Zahl von 5,2% auf 50°C erwärmt, dann 133 g Diisopropanolamin zugesetzt und auf dieser Temperatur gehalten, bis kein NCO mehr nachweisbar ist. Man erhält ein modifiziertes Organopolysiloxan der Viskosität 60 300 mPas/25°C, der Hydroxylfunktionalität 4, mit einem Gehalt an endständigen Hydroxylgruppen von 3,6 Gew.-% und einem Gehalt an Dimethylsiloxan-Einheiten von 58 Gew.-%.

J) Zu 770 g α,ω-Bis-(hydroxymethyl)-polydimethylsiloxan der OH-Zahl 80 werden bei Raumtemperatur 0,5 g p-Toluolsulfonsäuremethylester zugefügt. Unter Stickstoffatmosphäre wird die Mischung auf 70°C erwärmt. Bei dieser Temperatur werden 220 g eines Gemisches aus 2,4- und 2,6-Toluylendiisocyanat (80 : 20) zugefügt. Der Ansatz wird auf 150°C aufgeheizt und 6 Stunden bei dieser Temperatur belassen. Anschließend werden leicht flüchtige Anteile im Wasserstrahlvakuum abgezogen. Das erhaltene Präpolymer weist einen NCO-Gehalt von 6,6% auf. In 209 g Diisopropanolamin in 200 ml Dimethylformamid werden zügig 1000 g des o. g. Präpolymeren eingerührt. Nach vollständiger Umsetzung wird das Lösungsmittel abgezogen. Man erhält ein modifiziertes Organopolysiloxan der Viskosität von 66 100 mPas/25°C mit einem Gehalt an endständigen Hydroxylgruppen von 4,2% und einem Gehalt an Dimethylsiloxaneinheiten von 61%.

Die Ergebnisse der Wasseraufnahmetests an zelligen Elastomeren, welche die Polysiloxane A—J eingebaut enthalten, werden in der Tabelle 3) wiedergegeben:

Tabelle 3

| Polysiloxan | Nullgewicht (g) | Wasseraufnahme (g) | Wasseraufnahme (%) |
|---|---|---|---|
| A | 109,77 | 0,54 | 0,49 |
| B | 105,33 | 0,53 | 0,50 |
| C | 103,20 | 0,57 | 0,55 |
| D | 107,31 | 0,51 | 0,47 |
| E | 106,48 | 0,56 | 0,52 |
| F | 107,55 | 0,52 | 0,48 |
| G | 108,33 | 0,59 | 0,54 |
| H | 104,88 | 0,58 | 0,55 |

Fortsetzung

| Polysiloxan | Nullgewicht (g) | Wasseraufnahme (g) | (%) |
|---|---|---|---|
| I | 107,27 | 0,57 | 0,53 |
| J | 108,45 | 0,56 | 0,51 |

Ein wichtiges Kriterium zur Beurteilung von Elastomeren für eine Anwendung als Dämpfungs- und Anschlagpuffer ist das Dämpfungsmaximum (Tangens $\delta$) bestimmt durch Torsionsschwingversuch nach DIN 53 445. In allen erfindungsgemäßen Beispielen wurden Elastomere mit demselben Dämpfungsmaximum von —35°C erhalten wie beim Vergleichsbeispiel 1 a.

Darüber hinaus zeigen die erfindungsgemäß hergestellten Formkörper einen im Vergleich zu Beispiel 1 a wesentlich verminderten Abrieb.

Beispiel 4

a) Vergleichsversuch (ohne Silikon, ohne aromatisches Diamin)

Es wurde ein Präpolymer aus 100 Teilen eines linearen Ethandiol-Polyadipats (Molekulargewicht 2000) und 24 Teilen 1,5-Naphthylendiisocyanat hergestellt.

Dann wurden 2,15 Teile einer 50 %igen wäßrigen Lösung eines Fettsäure-Sulfonates mit 124 Teilen des NCO-Präpolymers intensiv vermischt und in die 70°C warme Form eingefüllt. Nach Schließung der Form wurden erhebliche Mengen des reaktiven Schaumes zwischen Form und Formdeckel ausgetrieben.

Das nach einer Ausheizzeit von 30 Minuten bei 90°C erhaltene Formteil zeigte im Druckversuch unter Wasser nach mehreren Verformungen eine beträchtliche Wasseraufnahme. Die dabei ermittelten Meßwerte sind in Tabelle 4 und die Ergebnisse aus der dynamischen Prüfung in den Tabellen 5 und 6 zusammengestellt.

b) Erfindungsgemäßes Verfahren (Silikon plus Diamin)

Zunächst wurden 100 Teile des genannten linearen Ethandiol-Polyadipats mit 0,75 Teilen eines Polysiloxanpräpolymers, welches durch Umsetzung von 2 Mol Organopolysiloxan mit 3 Mol Tolulyendiisocyanat (80 %2,4-Isomeres) und danach mit einer zur Zahl der freien NCO-Gruppen äquimolaren Menge an Diethanolamin erhalten worden war, und 0,2 Teilen 1,5-Naphthylendiamin versetzt. Mit dieser Mischung und 24 Teilen 1,5-Naphthylendiisocyanat wurde dann das NCO-Präpolymer hergestellt.

Anschließend wurden 2,15 Teile der 50 %igen wäßrigen Lösung eines Fettsäuresulfonates mit 124,95 Teilen des Präpolymers vermischt und in die 70°C warme Form gefüllt. Das Formteil konnte ohne jeglichen Austrieb gefertigt werden und zeigte im Druckversuch unter Wasser eine gegenüber dem Vergleichsversuch erheblich reduzierte Wasseraufnahme, die nach dynamischer Belastung nur unwesentlich größer wurde. Die Struktur des zelligen Polyurethanelastomeren zeigte eine hervorragend gleichmäßige und feine Zellstruktur. Das Formteil war leicht aus der Form zu entnehmen, die Formteiloberfläche war sehr gleichmäßig.

Wie aus den Tabellen 5 und 6 hervorgeht, weist das Material auch ein verbessertes dynamisches Verhalten auf. Die in der Rotationsflexometer-Prüfung nach Ablauf von 30 Minuten ermittelte höhere Temperatur ist auf die bei dieser Qualität größere mögliche Querauslenkung $S_D$ zurückzuführen.

c) Erfindungsgemäßes Verfahren (nur mit Silikon)

100 Teile des genannten linearen Ethandiol-Polyadipats wurden mit 0,75 Teilen des unter 4 b) beschriebenen Organopolysiloxanderivates versetzt. Mit dieser Mischung und 24 Teilen 1,5-Naphthylendiisocyanat wurde dann das NCO-Präpolymer hergestellt. Anschließend wurden 2,15 Teile einer 50 %igen wäßrigen Lösung des Fettsäure-Sulfonates mit 124,75 Teilen des NCO-Präpolymers intensiv vermischt und in 70°C warme Formen gefüllt. Das Formteil konnte nur mit deutlichem Austrieb hergestellt werden und zeigte im Druckversuch unter Wasser eine reduzierte Wasseraufnahme, die jedoch nach dynamischer Belastung höher lag als im Beispiel 4 b).

## Beispiel 5

Beispiel 4 b) wurde wiederholt, jedoch unter Verwendung von 0,2 Teilen 4,4'-Diaminodiphenylmethan und 0,75 Teilen eines Polysiloxanpräpolymers, welches durch Umsetzung von 2 Mol Organopolysiloxan mit 3 Mol Hexamethylendiisocyanat und anschließender Reaktion mit Diisopropanolamin in einer zur Zahl der freien NCO-Gruppen äquimolaren Menge, bezogen auf die NH-Gruppen des Diisopropanolamins, erhalten worden war. Die Ergebnisse sind unten in den Tabellen 4, 5 und 6 zusammengestellt.

## Beispiel 6

Beispiel 4 b) wurde wiederholt, jedoch unter Verwendung von 0,5 Teilen 3,3'-Dicarbethoxy-4,4'-diamino-diphenylmethan und 0,75 Teilen eines Polysiloxanpräpolymers, welches durch Umsetzung von 2 Mol Organopolysiloxan mit 3 Mol Hexamethylendiisocyanat erhalten worden war. Die Ergebnisse sind in den Tabellen 4, 5 und 6 zusammengestellt.

Tabelle 4

Wasseraufnahme nach 55 % Deformation des Formkörpers unter Wasser

Prüfbedingungen:

15 Zyklen mit einer Verformungsgeschwindigkeit von 100 mm/Min., wobei des Formteil sowohl im komprimierten als auch im entspannten Zustand jeweils 2 Minuten belassen wurde, bevor der nächste Zyklus begonnen wurde.

Die Wasseraufnahme wurde vor und nach dynamischer Belastung (55 % Deformation, 2 HZ, 500 000 Zyklen) bestimmt.

| Beispiel | Nullgew. (g) | Wasseraufnahme (Gew.-%) | | Druckkräfte (N) | | | | | | |
|---|---|---|---|---|---|---|---|---|---|---|
| | | vor dynamischer Belastung | nach dynamischer Belastung | | vor dynamischer Belastung | | | nach dynamischer Belastung | | |
| | | | | | 10% | 30% | 50% | 10% | 30% | 50% |
| 4a | 107,1 | 34 | – | Belast. → | 162,5 | 342,5 | 845 | – | – | – |
| | | | | Entlast. → | 152,5 | 297,5 | 735 | – | – | – |
| 4b | 109,8 | 0,5 | 0,9 | Belast. → | 210 | 530 | 1370 | 145 | 340 | 1000 |
| | | | | Entlast. → | 170 | 417 | 1140 | 115 | 310 | 895 |
| 4c | 107,3 | 1,2 | 24,4 | Belast. → | 160 | 430 | 1130 | 155 | 375 | 1090 |
| | | | | Entlast. → | 150 | 370 | 1005 | 130 | 285 | 900 |
| 5 | 102,2 | 0,6 | 5,2 | Belast. → | 175 | 405 | 1075 | 150 | 350 | 1020 |
| | | | | Entlast. → | 155 | 345 | 955 | 145 | 285 | 865 |
| 6 | 110 | 0,5 | 4,2 | Belast. → | 210 | 540 | 1385 | 140 | 325 | 1150 |
| | | | | Entlast. → | 165 | 415 | 1140 | 100 | 315 | 980 |
| 7 | 107 | 0,45 | 0,7 | Belast. → | 205 | 530 | 1240 | 145 | 330 | 1080 |
| | | | | Entlast. → | 150 | 400 | 1080 | 105 | 320 | 1010 |

(Beispiel 4a stellt Vergleichsversuch zu 4b und 4c dar.)

Messung der dynamischen Eigenschaften (nach DIN 53 533, Blatt 1 bis 3)

1. Kompressions-Flexometer (Meßergebnis siehe Tabelle 5)

Mittelspannung: 1,0 MPa, f = 24 Hz
Umgebungstemperatur: Raumtemperatur (23 ± 2)°C,
Laufzeit = 1 Stunde.
Probenabmessung: 17,8 mm Durchmesser × 25 mm hoch.

Tabelle 5

| Beispiel | R.G. g/cm³ | Hub = 4,45 mm | | | Hub = 6,35 mm | | |
|---|---|---|---|---|---|---|---|
| | | $\Delta$T (°C) | Fließen (%) | bleibende Verformung (%) | $\Delta$T (°C) | Fließen (%) | bleibende Verformung (%) |
| 4 a**) | 483 | 19,7 | –4,5 | 6,0 | 24,5 | –6,0 | 10,7 |
| 4 b | 475 | 13,7 | –3,8 | 4,0 | 20,2 | –4,0 | 6 |
| 4 c | 480 | 16 | –5,8 | 6,5 | 28*) | –8 | 13 |
| 5 | 486 | 12,0 | –3,0 | 3,8 | 18,2 | –4,1 | 5,8 |
| 6 | 472 | 10,0 | –3,3 | 4,1 | 17,8 | –3,7 | 5,3 |

*) Probe innen verfärbt. R.G. = Raumgewicht
**) Vergleichsbeispiel

2. Rotations-Flexometer (Meßergebnisse siehe Tabelle 6)

Prüfkörper: $d_o$ = 20,0 mm
$h_o$ = 20,0 mm; $A_o$ = 314 mm²
Frequenz = 25 Hz, Umgebungstemperatur: Raumtemperatur (23 ± 2)°C,
Konstante: Axialverformung $\Delta$h = 6,0 mm
Prüfparameter: Querauslenkung Sa.

Tabelle 6

| Beispiel | R.G. (g/dm³) | $\Delta$T-Messg. $S_a$ = 2,0 mm t = 20 Min. (°C) | Endlaufzeit = 30 Minuten | | | |
|---|---|---|---|---|---|---|
| | | | $S_D$ (mm) | $\tau_D$ (MPa) | $\Delta$T (°C) | $\gamma_D$ =$S_D$/($h_o$/minus) [1] |
| 4 a*) | 483 | 52 | 2,4 | 0,16 | 69 | 0,17 |
| 4 b | 475 | 33 | 3,8 | 0,097 | 92 | 0,27 |
| 4 c | 480 | 56 | 2,0 | 0,089 | 72 | 0,14 |
| 5 | 486 | 32 | 3,5 | 0,08 | 63 | 0,25 |
| 6 | 472 | 36 | 3,7 | 0,085 | 64 | 0,26 |

$S_a$ = Amplitude der Querauslenkung
$S_D$ = Dauerquerauslenkung $S_a$ bei $N_D$
$\gamma_D$ = Dauerverformbarkeit $S_D/h_o - \Delta h$
$\tau_D$ = Dauerfestigkeit $Q_D/A_o$
$\Delta$T = Temperaturerhöhung
$Q_D$ = Kraft zur Aufbringung der Dauerquerauslenkung $S_D$
R.G. = Raumgewicht
*) = Vergleichsbeispiel

Beispiel 7

Beispiel 4 b wurde wiederholt, jedoch waren vor Einfüllung des reaktiven Gemisches die Innenwandungen der 70°C warmen Form mit einer 40 %igen wäßrigen PUR-Dispersion mittels einer Sprühpistole besprüht worden, wobei das Wasser augenblicklich verdampfte und ein gleichmäßiger Film (0,2 mm) auf der Formwandung zurückblieb. Dann wurde die reaktive Mischung aus Beispiel 4 b in die auf diese Art und Weise präparierte Form gefüllt. Das nach der Entformung erhaltene Formteil hatte auf seiner gesamten Oberfläche den Polyurethan-Film bei guter Haftung angenommen. Bei den entsprechenden Druckversuchen unter Wasser zeigte der Puffer gegenüber dem Vergleichsversuch eine erheblich reduzierte Wasseraufnahme, die nach dynamischer Belastung nur geringfügig größer wurde.

Beispiel 8

a) Herstellung einer 20 %igen Lösung eines modifizierten Organopolysiloxans in Ethandiol-Polyadipat

1100 g eines $\alpha,\omega$-Hydroxymethyl-polydimethylsiloxans der OH-Zahl 80 und 333 g 1-Isocyanato-3,3,5-trimethyl-5-isocyanatomethyl-cyclohexan (IPDI) werden auf 70°C erwärmt, bis ein NCO-Gehalt von 3,25 % erreicht ist. Das NCO-Siloxan-Präpolymer wird nun zügig in eine Mischung aus 4650 g eines linearen Ethandiol-Polyadipats der OH-Zahl 56 und 117 g Diethanolamin gegeben und bei 40°C gehalten, bis kein NCO mehr nachweisbar ist.

Die Umsetzung des NCO-Präpolymers mit dem Aminoalkohol in Gegenwart der höhermolekularen Polyhydroxyverbindung B), die auch zum Aufbau des zelligen Elastomers verwendet wird, hat den Vorteil, daß das Reaktionsprodukt des OH-Endgruppen aufweisenden Siloxanpräpolymers in der Lösung der Polyhydroxylverbindung B) mit wesentlich geringerer Viskosität anfällt (650 mPas bei 80°C) als bei der Herstellung des entsprechenden hydroxyfunktionellen Siloxanpräpolymers ohne Gegenwart von B) (4000 mPa.s bei 80°C).

b) Erfindungsgemäße Umsetzung

Es wird wie in Beispiel 3 verfahren, jedoch wird in Abänderung der Mengen von Beispiel 3 3,75 Teile der 20 % Silikon enthaltenden Mischung nach Beispiel 8 a), sowie 97 Teile des linearen Ethandiol-Polyadipats gemäß Beispiel 1 b) verwendet.

| Nullgewicht (g) | Wasseraufnahme (g) | (%) |
|---|---|---|
| 108,75 | 0,59 | 0,54 |

**Patenansprüche**

1. Verfahren zur Herstellung eines wasserdichten, feinzelligen Polyurethanelastomeren mit einer Dichte von 0,3 bis 0,8 g/cm$^3$ durch Umsetzung von NCO-Präpolymeren aus aromatischen Polyisocyanaten und Polyhydroxylverbindungen des Molekulargewichts 400 bis 6000 mit Wasser, gegebenenfalls unter Mitverwendung von kleinen Anteilen an aromatischen Diaminen in einer beliebigen Verfahrensstufe, in einem Äquivalentverhältnis zwischen NCO-Gruppen und gegenüber Isocyanaten reaktiven Gruppen zwischen 0,95 : 1 bis 1,1 : 1, gegebenenfalls in Gegenwart von Katalysatoren und/oder anderen, an sich bekannten Hilfs- und Zusatzmitteln, Einfüllen der Reaktionsmischung in Formen, Ausheizen bei erhöhten Temperaturen und gegebenenfalls Versehen der Elastomeren mit einer durchgehenden, dichten, nichtporösen Haut aus Polyurethan oder Polyurethanharnstoff, mit einer Dicke von 0,05 bis 1 mm, dadurch gekennzeichnet, daß man

A) 4,4'-Diisocyanatodiphenylmethan oder 1,5-Naphthylendiisocyanat in NCO/OH-Äquivalentverhältnissen von 1,5 : 1 bis 3 : 1 mit

B) Polyestern auf Basis von Adipinsäure und aliphatischen Diolen oder Polyethern auf Basis von Tetramethylenoxiddiolen

zu einem NCO-Präpolymeren umsetzt und dieses mit

C) 0,5 bis 2,0 Gew.-% Wasser, bezogen auf das Gesamtgemisch aller anderen Reaktionspartner, zum Elastomeren umsetzt, wobei

D) gegebenenfalls in einer beliebigen Verfahrensstufe, ein Zusatz von 0,1 bis 0,8 Gew.-% an 4,4'-Diaminodiphenylmethan, 1,5-Diaminonaphthalin oder 2,4- und/oder 2,6-Toluylendiamin,

E) gegebenenfalls Katalysatoren und/oder anderen, an sich bekannten Hilfs- und Zusatzmitteln und
F) in einer der Verfahrensstufen ein Zusatz zum Reaktionsgemisch von 0,1 bis 3 Gew.-%, bezogen auf den gesamten Reaktionsansatz, eines oder mehrerer Polysiloxane der allgemeinen Formel

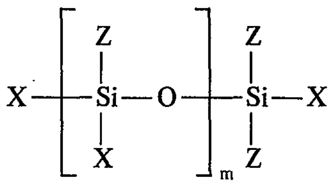

(I)

in welcher

m eine ganze Zahl zwischen 5 und 250 bedeutet, die Reste
Z gleich oder verschieden sein können und für $C_1$- bis $C_5$-Alkyl, $C_6$- bis $C_{15}$-Aryl oder Siloxylreste, stehen und die Reste
X die gleiche Bedeutung wie Z haben oder H—Y—R-Gruppen darstellen, wobei jedoch das Polysiloxan insgesamt höchstens 5, mindestens jedoch 1 Gruppe H—Y—R— enthält, wobei
Y für

—NR'—, —O—, 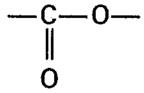 oder —S—,

R einen gegebenenfalls Heteroatome enthaltenden $C_1$- bis $C_6$-Alkylenrest darstellt und
R' Wasserstoff, einen $C_1$- bis $C_6$-Alkylrest oder einen $C_5$- bis $C_9$-Cycloalkylrest bedeutet,

wobei im Falle von X gleich H—Y—R diese organofunktionellen Polysiloxane mit Polyisocyanaten in einem Äquivalentverhältnis NCO-Gruppen/aktiven Harnstoffatomen von ca. 1,5 : 1 bis 3 : 1 und gegebenenfalls überschüssigen Kettenverlängerungsmitteln aus der Reihe von mindestens difunktionellen Alkoholen bzw. Aminoalkoholen in einem Äquivalentverhältnis zwischen Isocyanatgruppen und aktiven Wasserstoffatomen von 1 : 1,5 bis 1 : 6 in NCO- oder OH-funktionelle Silikon-Präpolymere überführt sein können, erfolgt.

2. Verfahren nach Anspruch 1, dadurch gekennzeichnet, daß die erfindungsgemäßen Organo-Polysiloxane oder ihre NCO- bzw. OH-Prepolymeren in Kombination mit inerten Polysiloxanen mit im Durchschnitt 5 bis 400 Siloxaneinheiten und bei denen alle Reste X und Z in Formel I für Methylgruppen, beziehungsweise bis zu 50 % auch für Phenylgruppen stehen, in einem Gewichtsverhältnis der beiden Polysiloxankomponenten zwischen 4 : 1 und 1 : 4 eingesetzt werden.

3. Verfahren nach Ansprüchen 1 und 2, dadurch gekennzeichnet, daß man Organo-Polysiloxane zusetzt, bei denen m für eine ganze Zahl zwischen 5 und 30, Z für Methylgruppen und zwei der Reste X für eine Gruppe H—Y—R— stehen.

4. Verfahren nach Ansprüchen 1 bis 3, dadurch gekennzeichnet, daß man Organo-Polysiloxane einsetzt, bei denen Y für Sauerstoff steht.

5. Verfahren nach Ansprüchen 1 bis 4, dadurch gekennzeichnet, daß man Polysiloxane einsetzt, die durch Umsetzung der Organo-Polysiloxane an den Gruppen H—Y—R— mit einem Überschuß an Polyisocyanat und anschließend mit einem Aminopolyol oder einem in der Komponente B) gelösten Aminopolyol präpolymerisiert worden sind und einen Gehalt an endständigen Hydroxylgruppen von 0,8 bis 5 Gew.-% und einem Gehalt an Struktureinheiten der Formel —O—$Si(R)_2$— von 30 bis 90 Gew.-% aufweisen.

6. Verfahren nach Ansprüchen 1 bis 4, dadurch gekennzeichnet, daß man in einer ersten Stufe aus Komponente A) und der Gesamt- oder Teilmenge vom B) ein Präpolymer herstellt und dieses in einer zweiten Stufe mit den Komponenten C) sowie D) und der Restmenge von B) umsetzt, wobei die Polysiloxane F) dem Präpolymer oder der Komponente B) zugesetzt werden.

7. Verfahren nach Ansprüchen 1 bis 6, dadurch gekennzeichnet, daß man als Polyisocyanat A) das 1,5-Naphthylendiisocyanat und als aromatisches Diamin D) das 1,5-Diaminonaphthalin verwendet.

8. Verwendung der wasserdichten, feinzelligen Polyurethanelastomeren, welche nach Verfahren der Ansprüche 1 bis 7 hergestellt werden, in Federungs- und Dämpfungselementen.

**Claims**

1. Process for the production of a water-tight, fine-celled polyurethane elastomer with a density of 0.3 to 0.8 g/$cm^3$ by reacting NCO prepolymers of aromatic polyisoyanates and polyhydroxyl compounds of a molecular weight of 400 to 6,000 with water, optionally also using small amounts of aromatic diamines in any desired process stage, in an equivalent ratio between the NCO groups and the groups reactive towards isocyanates of between 0.95 : 1 and 1.1 : 1, optionally in the presence of catalysts and/or other auxiliaries and additives known per se, filling the reaction mixture into moulds, completely curing it at elevated temperatures and optionally providing the elastomers with a continuous, tight, non-porous skin of polyurethane or polyurethane urea, with a thickness of 0.05 to 1 mm, characterised in that

A) 4,4'-diisocyanatodiphenylmethane or 1,5-naphthylene diisocyanate is reacted in NCO/OH equivalent ratios of 1.5 : 1 to 3 : 1 with polyesters based on adipic acid and aliphatic diols or polyethers based on tetramethylene oxide diols
to form an NCO prepolymer and this is reacted with
C) 0.5 to 2.0 % by weight of water, based on the total mixture of all the other reactants, to form the elastomer, wherein
D) optionally, in any desired process stage, 0.1 to 0.8 % by weight of 4,4'-diaminodiphenylmethane, 1,5-diaminonaphthalene or 2,4- and/or 2,6-toluylenediamine, and
E) optionally, catalysts and/or other auxiliaries and additives known per se, are added and
F) in one of the process stages 0.1 to 3 % by weight, based on the total reaction mixture, of one or more polysiloxanes of the general formula

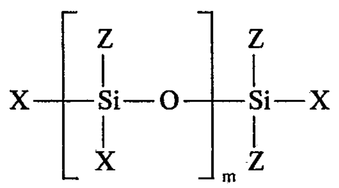

(I)

in which

m denotes an integer between 5 and 250, the radicals
Z can be identical or different and represent $C_1$- to $C_5$-alkyl, $C_6$- to $C_{15}$-aryl or siloxyl radicals and the radicals
X have the same meaning as Z or represent H—Y—R groups, the polysiloxane containing, however, a total of at most 5, but at least 1 H—Y—R group, wherein
Y represents

—NR'—, —O—, 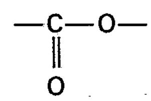 or —S—,

R represents a $C_1$- to $C_6$-alkylene radical optionally containing hetero atoms and
R' denotes hydrogen, a $C_1$- to $C_6$-alkyl radical or a $C_5$- to $C_9$-cycloalkyl radical,

wherein in the case where X is H—Y—R these organofunctional polysiloxanes can be converted into NCO- or OH-functional silicone prepolymers by reaction with polyisocyanates in an equivalent ratio of NCO groups/active urea atoms of about 1.5 : 1 to 3 : 1 and optionally excess chain-lengthening agents from the series of at least difunctional alcohols or aminoalcohols in an equivalent ratio between isocyanate groups and active hydrogen atoms of 1 : 1.5 to 1 : 6, are added to the reaction mixture.

2. Process according to Claim 1, characterised in that the organo-polysiloxanes according to the invention or their NCO- or OH-prepolymers are used in combination with inert polysiloxanes containing an average of 5 to 400 siloxane units and in which all of the radicals X and Z in formula I represent methyl groups, or up to 50 % also represent phenyl groups, in a weight ratio of the two polysiloxane components of between 4 : 1 and 1 : 4.

3. Process according to Claims 1 and 2, characterised in that organo-polysiloxanes are added in which m represents an integer between 5 and 30, Z represents methyl groups and two of the radicals X represent a H—Y—R group.

4. Process according to Claims 1 to 3, characterised in that organo-polysiloxanes are used in which Y represents oxygen.

5. Process according to Claims 1 to 4, characterised in that polysiloxanes are used which have been prepolymerised by reacting the organo-polysiloxanes at the H—Y—R groups with an excess of polyisocyanate and then with an aminopolyol or an aminopolyol dissolved in component B), and which have

a content of terminal hydroxyl groups of 0.8 to 5 %by weight and a content of structural units of the formula —O—Si(R)$_2$— of 30 to 90% by weight.

6. Process according to Claims 1 to 4, characterised in that in a first stage a prepolymer is prepared from component A) and the total quantity or part of B), and this prepolymer is reacted in a second stage with the components c) and D) and the remaining quantity of B), the polysiloxanes F) being added to the prepolymer or the component B).

7. Process according to Claim 1 to 6, characterised in that 1,5-naphthylene diisocyanate is used as the polyisocyanate A) and 1,5-diaminonaphthalene is used as the aromatic diamine D).

8. Use of the water-tight, fine-celled polyurethane elastomers which are produced according to processes of Claims 1 to 7, in cushioning and buffering elements.

**Revendications**

1. Procédé de préparation d'un polyuréthane élastomère étanche à l'eau, à fin alvéole, ayant une masse volumique de 0,3 à 0,8 g/cm$^3$, par réaction de prépolymères contenant des groupes NCO, obtenus à partir de polyisocyanates aromatiques et de composés polyhydroxylés ayant un poids moléculaire de 400 à 6000, avec de l'eau, éventuellement en utilisant aussi de petites quantités de diamines aromatiques dans une étape opératoire quelconque, selon un rapport entre les équivalents des groupes NCO et des groupes pouvant réagir avec les isocyanates compris entre 0,95 : 1 et 1,1 : 1, éventuellement en présence de catalyseurs et/ou d'autres adjuvants et additifs connus en soi, introduction du mélange réactionnel dans des moules, chauffage à des températures élevées et éventuellement en munissant l'élastomère d'une peau continue non poreuse, étanche, en polyuréthane ou polyuréthane-urée, ayant une épaisseur de 0,05 à 1 mm, procédé caractérisé en ce qu'on fait réagir:

A) le 4,4'-diisocyanatodiphénylméthane ou le 1,5-diisocyanate de naphtylène, selon des rapports entre équivalents de NCO/OH compris entre 1,5 : 1 et 3 : 1, avec
B) des polyesters à base de l'acide adipique et de diols aliphatiques, ou avec des polyéthers à base de (oxyde de tétraméthylène)-diols, pour obtenir un prépolymère contenant du groupe NCO et l'on fait réagir celui-ci avec
C) 0,5 à 2,0 %en poids d'eau, par rapport au poids total de tous les autres corps participant à la réaction, pour obtenir un élastomère, en ajoutant:
D) éventuellement dans une étape opératoire quelconque, 0,1 à 0,8 % en poids de 4,4'-diaminodiphénylméthane, de 1,5-diaminonaphtalène ou de 2,4- et/ou de 2,6-toluènediamine,
E) éventuellement des catalyseurs et/ou d'autres adjuvants et additifs connus en soit, et
F) dans l'une des étapes opératoires, en ajoutant au mélange réactionnel 0,1 à 3 %en poids, par rapport à la charge de réaction totale, d'un ou plusieurs polysiloxanes de formule générale:

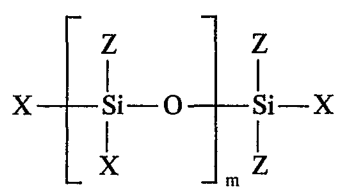

(I)

dans laquelle

m représente un nombre entier valant de 5 à 250, les restes
Z peuvent être identiques ou différents et ils représentent des groupes alkyles en C$_1$ à C$_5$, aryles en C$_6$ à C$_{15}$ ou des restes siloxyles, et les restes
X ont le même sens que Z ou représentent des groupes H—Y—R, le polysiloxane ne contenant dans son ensemble qu'au maximum 5, mais au minimum 1 groupe H—Y—R, et
Y représentant

—NR'—, —O—, 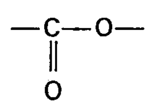 ou —S—,

R représentant un reste alkylène en C$_1$ à C$_6$, contenant éventuellement des hétéroatomes, et R' représentant un atome d'hydrogène, un reste alkyle en C$_1$ à C$_6$ ou un reste cycloalkyle en C$_5$ à C$_9$,

et, si X représente H—Y—R, on peut transformer ces polysiloxanes à groupes fonctionnels organi-

ques, avec des polyisocyanates selon un rapport entre équivalent de groupes NCO/atomes d'urée actifs d'environ 1,5 : 1 à 3 : 1 et éventuellement avec un excès d'agent d'allongement des chaînes choisis dans la série de alcools ou aminoalcools au moins difonctionnels, selon un rapport entre équivalents de groupes isocyanates et d'atomes d'hydrogène actif de 1 : 1,5 à 1 : 6, en des prépolymères de silicone contenant des groupes NCO ou OH fonctionnels.

2. Procédé selon la revendication 1, caractérisé en ce qu'on utilise les polyorganosiloxanes selon l'invention ou leurs prépolymères contenant des groupes NCO ou OH en combinaison avec des polysiloxanes inertes comportant en moyenne 5 à 400 motifs siloxanes et dans lesquels tous les restes X et Z de la formule 1 représentent les groupes méthyles ou représentent jusqu'à 50 % aussi des groupes phényles, selon un rapport pondéral entre les deux polysiloxanes compris entre 4 : 1 et 1 : 4.

3. Procédé selon les revendications 1 et 2, caractérisé en ce qu'on ajoute des polyorganosiloxanes dans lesquels m représente un nombre entier compris entre 5 et 30, Z représente des groupes méthyles et deux des restes X représentent un groupe H—Y—R—.

4. Procédé selon les revendications 1 à 3, caractérisé en ce qu'on utilise des polyorganosiloxanes dans lesquels Y représente un atome d'oxygène.

5. Procédé selon les revendications 1 à 4, caractérisé en ce qu'on utilise des polysiloxanes que l'on a prépolymérisés par réaction des polyorganosiloxanes, au niveau des groupes H—Y—R—, avec un excès de polyisocyanates puis avec un aminopolyol ou un aminopolyol dissous dans le composant B), et qui présente une teneur en des groupes hydroxyles terminaux de 0,8 à 5 % en poids et une teneur en des motifs de structure de formule —O— $Si(R)_2$— de 30 à 90 % en poids.

6. Procédé selon les revendications 1 à 4, caractérisé en ce qu'on prépare dans une première étape, à partir du composant A) et de la totalité ou d'une partie de B), un prépolymère et, dans une seconde étape, on fait réagir ce dernier avec les composants C) ainsi que D) et le reste de B), en ajoutant le polysiloxane F) au prépolymère ou au composant B).

7. Procédé selon les revendications 1 à 6, caractérisé en ce qu'on utilise comme polyisocyanate A) le 1,5-diisocyanate de naphtylène et, comme diamine aromatique D), le 1,5-diaminonaphtalène.

8. Utilisation des polyuréthanes élastomères, étanches à l'eau, à fins alvéoles, qui ont été préparés par un procédé selon les revendications 1 à 7, dans des éléments de suspension élastique et d'amortissement.